# EUROPEAN PATENT SPECIFICATION

(11) **EP 3 585 053 B1**
(45) Date of publication and mention of the grant of the patent: **01.02.2023**
(21) Application number: 19181272.6
(22) Date of filing: 19.06.2019
(51) Int. Cl.: H04N 7/18, H04M 11/02

(54) **INTERCOM DOOR STATION, INTERCOM SYSTEM, CONTROL METHOD, AND PROGRAM**
GEGENSPRECHANLAGEN-TÜRSTATION, GEGENSPRECHSYSTEM, STEUERUNGSVERFAHREN UND PROGRAMM
STATION DE PORTE D'INTERPHONE, SYSTÈME D'INTERPHONE, PROCÉDÉ DE COMMANDE ET PROGRAMME

(30) Priority: 19.06.2018 JP 2018116457
(43) Date of publication of application: 25.12.2019
(73) Proprietor: Panasonic Intellectual Property Management Co., Ltd., Osaka-shi, Osaka 540-6207 (JP)
(72) Inventor: Yagi, Toshihiko, Osaka-shi, Osaka 540-6207 (JP); Kuwano, Go, Osaka-shi, Osaka 540-6207 (JP)
(74) Representative: Appelt, Christian W.

(56) References cited:
- WO-A1-2012/086622
- JP-A- 2004 005 384
- JP-A- 2010 080 993
- US-A1- 2006 066 440
- US-A1- 2015 092 055
- SC 37 VIA SC 29 SECRETARIAT: "ISO/IEC 19794-5/PDAM 1 [SC 29 N 7328]", 76. MPEG MEETING; 03-04-2006 - 07-04-2006; MONTREUX; (MOTION PICTURE EXPERT GROUP OR ISO/IEC JTC1/SC29/WG11),, no. M13107, 17 March 2006 (2006-03-17), XP030041776,

## Description

### Technical Field

The present disclosure generally relates to an intercom door station, an intercom system, a control method, and a program. More particularly, the present disclosure relates to an intercom door station installed in a common area such as the lobby of a multi-family dwelling house, an intercom system including such an intercom door station, a method for controlling the intercom door station, and a program.

### Background Art

JP 2012-15974 A (hereinafter referred to as "D1") discloses an intercom system. The intercom system of D1 includes: an intercom outdoor station with a camera (intercom door station) installed at the main entrance of a single-family dwelling house or at the common area (lobby) of a multi-family dwelling house; and an intercom indoor station installed inside the single-family dwelling house or a dwelling unit of the multi-family dwelling house to allow the resident of the house or the dwelling unit to speak with a caller over the intercom door station.

Such an intercom door station includes, around the middle of the front panel of its housing, two types of operating members, which allow the caller to operate press keys and buttons of a user interface. One of the two types of operating members is provided to allow the caller to press numeric keys of 0 to 9 and an asterisk (*) key. The other type of operating member is provided to confirm the command (such as the room number of a designated dwelling unit) that has been entered with the former type of operating member and transmit a call signal to the indoor station of the designated dwelling unit.

US 2006/066440 A1 describes a door lock control apparatus. The disclosure mainly comprises: a control box and a monitor, wherein a plurality of function keys, a microphone, a speaker, a camera lens, an identifier, a storage device, two grips, a tongue part, and a latch part are mounted on the outside of the control box, and a central processing unit and a wireless transmitter are mounted on the inside of the control box, wherein two keyholes are mounted respectively on the two grips, the tongue part is moved by the two grips in an interactive way, the latch part is controlled by the keyhole, the lock body is coupled with an entrance door, and the operation for opening and closing the latch part is further controlled by identification of the identifier and the camera lens on the control box so as to achieve the purpose of entrance control.

JP 2010-080993 A describes capturing an image of a visitor by a camera of a slave unit. In a master unit, when the face area of the visitor cannot be detected in the captured still image, voice instructing to stand at the front of the slave unit is outputted to the visitor from a speaker of the slave unit. When the face area of the visitor is detected but the feature point of the face cannot be extracted, the voice instructing to show the concealed area of the face is outputted to the visitor from the speaker of the slave unit. Furthermore, on an operation panel of the master unit, a caution mode image displaying information for urging caution is displayed in the case of a detection error, and an alert mode image displaying information for urging the alert at a higher level is displayed in the case of a feature extraction error.

WO 2012/086622 A1 describes a controller for unlocking an electronic lock using an unlocking process. A home controller comprises a memory, a CPU, and a communication interface that communicates with an electronic lock. The memory associates, for each individual, identification information used to identify an individual with category information for specifying the relevant individual's category from among a plurality of categories that specify an individual, and stores the same. The CPU performs individual authentication on the basis of externally input information and identification information. From the category information stored for each individual, the CPU specifies category information associated with the identification information of the authenticated individual. Using the transmission interface the CPU puts the electronic lock into an unlocked state using the unlocking process that is in accordance with specified category information.

SC 37 VIA SC 29 SECRETARIAT: "ISO/IEC 19794-5/PDAM 1 [SC 29 N 7328]" describes practices for the photography of faces, especially when the resulting images are to be used for purposes of identification, either by automated face recognition systems or by human viewers.

US 2015/092055 A1 describes a camera to take an image of a pool area, sending the image from the camera to a remote computing device, displaying the image on the remote computing device, and using the remote computing device to select a detection zone.

JP 005384 A describes an image processing device, which comprises an image input part outputting an inputted color image as digital data, a flesh color area extracting part extracting a flesh color area from the color image, a parietal region detecting part detecting a position of a parietal region of a person from the color image and the flesh color area, a mouth detecting part detecting a mouth of the person from the flesh color area and the position of the parietal region, an eye detecting part detecting eyes of the person from the color image, the flesh color area and the position of the parietal region, and a jaw detecting part calculating a jaw position of the person from positions of the eyes and mouth. In addition, it is composed of a center line detecting part detecting a center line of a face of the person from the color image, and positions of the mouth and eyes, an area correcting part correcting the face area on the basis of the jaw position and the facial center line, and a determining part inputted with the color image, the flesh color area, the positions of the eyes and mouth and a corrected rectangular area, and determining whether or not the extracted flesh color area is a face of the person.

### Summary

There has been an increasing demand for capturing an image of the operator (such as a visitor, for example, and hereinafter referred to as the "visitor") who operates the user interface of such an intercom door station such that the image of the visitor thus captured may be used in various types of processing after that (including displaying the image on the indoor station and authenticating or recognizing the visitor by image-based authentication). Nevertheless, capturing an image of the visitor while he or she is operating the user interface in order to call a particular indoor station does not always produce a nice shot of the visitor but may sometimes produce a shot of the visitor who has either turned aside or faced down. This could cause a significant decline in the accuracy or reliability of the image-based identification of the visitor.

In view of the foregoing background, it is therefore an object of the present disclosure to provide an intercom door station, an intercom system, a control method, and a program, all of which are configured or designed to improve the reliability of person identification.

The above object is achieved by an intercom door station according to claim 1, an intercom system according to claim 10, a method according to claim 11, and a program according to claim 12. Claims 2 to 9 refer to specifically advantageous realizations of the intercom door station according to claim 1.

### Brief Description of Drawings

FIG. 1 is a front view of an intercom door station according to an exemplary embodiment of the present disclosure;
FIG. 2Ais a block diagram illustrating a configuration for an intercom system according to the exemplary embodiment of the present disclosure;
FIG. 2B is a block diagram illustrating a configuration for an outdoor controller of the intercom door station;
FIG. 3A schematically illustrates a guidance image to be displayed on a monitor of the intercom door station;
FIG. 3B schematically illustrates another guidance image to be displayed on the monitor of the intercom door station;
FIG. 3C schematically illustrates still another guidance image to be displayed on the monitor of the intercom door station;
FIG. 4A schematically illustrates yet another guidance image to be displayed on the monitor of the intercom door station;
FIG. 4B schematically illustrates yet another guidance image to be displayed on the monitor of the intercom door station;
FIG. 5 schematically illustrates an image captured by an image capture device of the intercom door station;
FIG. 6 is a timing diagram illustrating how the intercom system operates;
FIG. 7 is a block diagram illustrating a configuration for a first variation of the intercom system;
FIG. 8 schematically illustrates a guidance image to be displayed on a monitor of an intercom door station according to a second variation of the intercom system;
FIG. 9 is a block diagram illustrating a configuration for a third variation of the intercom system;
FIG. 10A is a block diagram illustrating a configuration for a fifth variation of the intercom system; and
FIG. 10B is a block diagram illustrating a configuration for an outdoor controller according to the fifth variation.

### Description of Embodiments

### (1) Overview

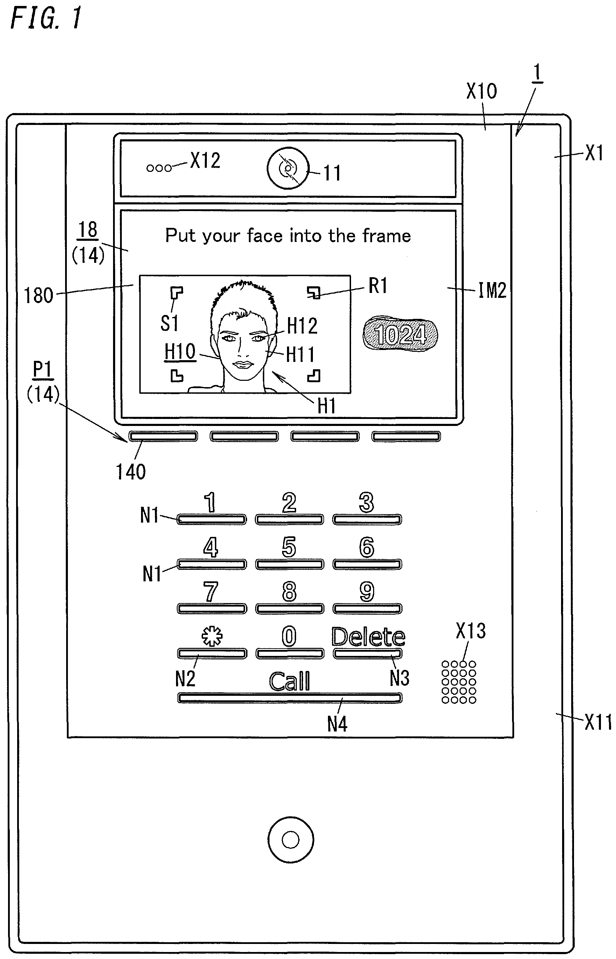

Note that FIGS. 1-10B to be referred to in the following description of embodiments are schematic representations. Thus, the sizes, thicknesses, and other attributes of the respective constituent elements illustrated on those drawings are not always to scale, compared with actual ones.

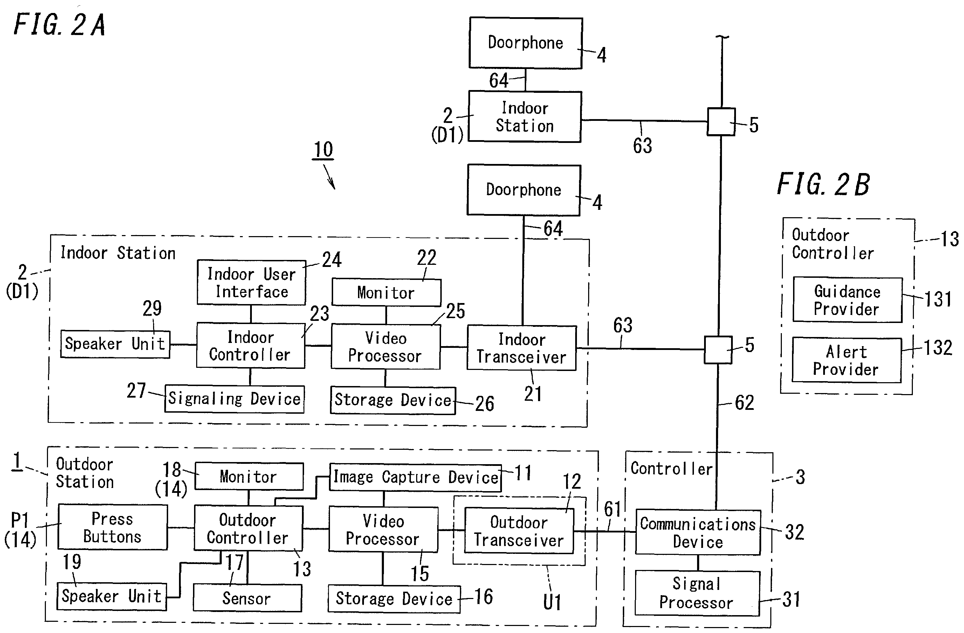

An intercom system 10 according to this embodiment may be used, for example, in a multi-family dwelling house such as an apartment or condominium (corresponding to what is called a "mansion" in Japan). In the intercom system 10, an outdoor station 1 (slave station) and respective indoor stations 2 (master stations or communications devices) communicate with each other via a controller 3 as shown in FIG. 2A. However, this is only an example and should not be construed as limiting. Alternatively, the intercom system 10 according to this embodiment is also applicable to a single-family dwelling house instead of such a multi-family dwelling house. Still alternatively, the intercom system 10 may also find applications in non-dwelling houses such as offices, stores, schools, and nursing-care facilities.

An intercom door station according to this embodiment is supposed to be an outdoor station 1 that forms part of an intercom system 10 (see FIG. 2A) as an example. The outdoor station 1 may be, for example, a common terminal installed in a common area (such as a lobby) of a multi-family dwelling house (i.e., a lobby intercom). The outdoor station 1 may be configured to communicate with (such as accept speaking and transmitting a video signal) indoor stations 2 over a number of multi-family dwelling houses, for example.

In this embodiment, the outdoor station 1 (intercom door station) includes an outdoor user interface 14 (user interface) for receiving an operating command entered by a human and an outdoor controller 13 (controller). In the following description, the "human" will be sometimes hereinafter referred to as an "operator H1" as a person who is either operating or going to operate the user interface (see FIG 1). The operator H1 may sometimes be a visitor and may sometimes be a resident of the dwelling house. In FIG. 1, real-time video, captured by the image capture device 11 of the outdoor station 1, of the operator H1 himself is displayed on the monitor screen 180.

Then, when finding a particular condition satisfied, the outdoor controller 13 accepts the operating command received at the outdoor user interface 14. The particular condition includes at least one of a first condition or a second condition. As used herein, to "accept an operating command" means, if the operating command is entered to call a particular indoor station 2 (communications device), more particularly, if the operating command is entering a room number followed by pressing down a Call button N4 to confirm the entry, actually calling that indoor station 2. In other words, unless a particular condition is satisfied, the outdoor controller 13 does not call the indoor station 2 (i.e., the call is declined) even if the Call button N4 is pressed down.

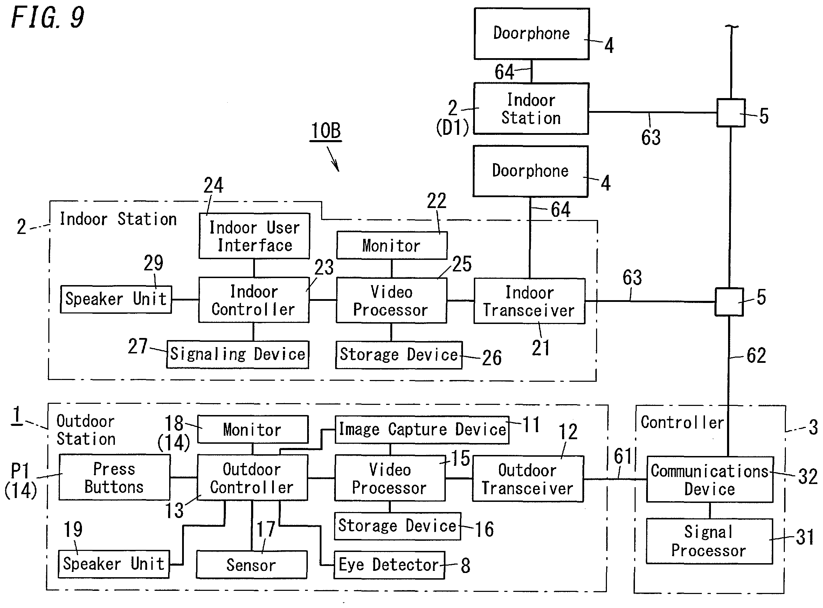

The first condition is that at least a particular region H10 of the operator H1 should fall within a predetermined range R1 where the operator H1 is identifiable. As used herein, the "identification" according to the first condition may be identification (or recognition) made by image-based authentication process, for example. The image-based authentication may be "face authentication" (also called "face recognition") for authenticating or recognizing a given person by extracting features such as the relative arrangement, sizes, shapes, and other features of his or her facial parts including eyes, nose, mouth, and profile from a face image captured or "iris authentication" (also called "iris recognition") for authenticating a given person by extracting an iris portion from an eye image. Note that a determination about the first condition is not always made only for the purpose of image-based authentication but may also be made to allow another person (such as a resident) to recognize, with his or her own eyes, the operator H1 shot in the image. For example, when an image representing a particular region H10 such as a facial image shot within the predetermined range R1 is obtained, transferring the image to the indoor station 2 increases the chances of the resident or any other user successfully recognizing the operator H1 shot in the image displayed on the indoor station 2. Alternatively, the "identification" may also be made by an eye detector 8 (see FIG. 9) for detecting the line of sight of a human.

The second condition is that the operator H1 should be successfully authenticated (or recognized) based on information about the particular region H10. Note that the authentication according to the second condition may be made by the image-based authentication process, for example.

According to this configuration, when finding a particular condition satisfied, the outdoor controller 13 accepts the operating command received at the outdoor user interface 14. This improves the reliability of person (such as a person who is operating the outdoor user interface 14) identification. Among other things, when the particular condition includes the first condition, this increases the chances of information about the particular region H10 of the operator H1 (such as an image representing the particular region H10) being acquired. Here, in the above example, the determinations about the first condition and the second condition are made whether or not "to accept the operating command." However, the determinations about the first condition and the second condition do not have to be made whether or not "to accept the operating command" but may also be made whether or not "to unlock the electric lock device." That will be explained in the following "(3.5) Fifth variation (unlocking electric lock device: Part I)."

Optionally, only one of the first and second conditions may be set on the outdoor station 1 and the operating command may be accepted when finding one of these two conditions satisfied. That is to say, in an exemplary embodiment, if an image of the operator H1 is not used for image-based authentication but just transmitted to, and displayed on, the indoor station 2, then only the first condition may be set. On the other hand, if an image of the operator H1 is used for image-based authentication, then it is recommended that at least the second condition be set on the outdoor station 1.

In the following "(2) Details" section, a situation where only the first condition is set on the outdoor station 1 with no image-based authentication made will be described. A situation where image-based authentication is carried out will be described in the "(3) Variations" section.

### (2) Details

Next, an outdoor station 1 (intercom door station) and intercom system 10 according to this embodiment will be described in further detail.

In the following description, in a situation where the outdoor station 1 is installed on a structural element surface (such as a wall surface) of a common area like a lobby, the direction perpendicular to a horizontal plane will be hereinafter referred to as an "upward/downward direction." The direction pointing vertically downward for the viewer facing the outdoor station 1 squarely will be hereinafter referred to as a "downward direction." The direction perpendicular to the upward/downward direction and parallel to the structural element surface will be hereinafter referred to as a "rightward/leftward direction." The direction pointing to the right for the viewer facing the outdoor station 1 squarely will be hereinafter referred to as a "rightward direction." The direction pointing to the left for the viewer facing the outdoor station 1 squarely will be hereinafter referred to as a "leftward direction." Furthermore, the direction perpendicular to both the upward/downward direction and the rightward/leftward direction (i.e., the direction perpendicular to the structural element surface) will be hereinafter referred to as a "forward/backward direction." The rear of the structural element surface (i.e., the region behind the wall) will be hereinafter referred to as "backward." Note that these directions should not be construed as limiting the directions in which the outdoor station 1 is used.

### (2.1) Overall configuration

First of all, an overall configuration for the intercom system 10 will be described with reference to FIG. 2A.

An intercom system 10 according to this embodiment includes an outdoor station 1, a plurality of (e.g., two in FIG. 2A) indoor stations 2, a controller 3, a plurality of (e.g., two) doorphones 4, and a plurality of (e.g., two in FIG. 2A) splitters 5 as shown in FIG. 2A.

Each of the plurality of indoor stations 2 may be, for example, a dwelling unit terminal installed in an associated dwelling unit of a multi-family dwelling house. Each indoor station 2 is configured to communicate with (such as enabling speaking to the operator H1 and receiving a video signal) the outdoor station 1. Each indoor station 2 includes a monitor 22 for displaying video captured by the image capture device 11 of the outdoor station 1. The indoor station 2 may also be installed in a caretaker's room or a multi-purpose room of the multi-family dwelling house. As used herein, the "multi-purpose room" refers to a common area facility in the multi-family dwelling house. Examples of the multi-purpose rooms include a meeting room, a guest room, a kids' room, and a party room.

The controller 3 is configured to perform calling control and relay signals between the outdoor station 1 and the indoor stations 2. The controller 3 may be installed, for example, in the caretaker's room. The controller 3 relays, when the visitor attempts to call any of the indoor stations 2 using the outdoor station 1, signals to be transmitted and received between the outdoor station 1 and the indoor station 2.

Each of the plurality of doorphones 4 may be installed, for example, at the outdoor entrance of an associated dwelling unit of the multi-family dwelling house. The plurality of doorphones 4 correspond one to one to the plurality of indoor stations 2. Each doorphone 4 is configured to communicate with (such as enabling speaking or transmitting a video signal) with an associated indoor station 2. Note that no doorphone 4 may be connected to the indoor station 2 installed in a multi-purpose room, for example.

The outdoor station 1 is connected to the controller 3 via a first main line 61. The plurality of splitters 5 is configured to form a daisy chain via a second main line 62 and also enables the plurality of indoor stations 2 to be connected together via a plurality of branch lines 63. That is to say, in this embodiment, the second main line 62 branches into the plurality of branch lines 63 and the plurality of splitters 5 are provided at respective branching points of the plurality of branch lines 63. This allows each indoor station 2 to be connected to the second main line 62 via an associated branch line 63 and an associated splitter 5.

Each indoor station 2 is also connected to the controller 3 via the associated branch line 63 and the associated splitter 5. Each doorphone 4 is connected to an associated indoor station 2 via a connection line 64. Each of the first main line 61, second main line 62, branch lines 63, and connection lines 64 may be implemented as a twisted pair cable, for example.

### (2.2) Outdoor station

Next, a configuration for the outdoor station 1 will be described. The outdoor station 1 includes an image capture device 11, an outdoor transceiver 12, an outdoor controller 13 (controller), a plurality of press buttons P1, a video processor 15, a storage device 16, a sensor 17, and a monitor 18 as shown in FIG. 2A. The plurality of press buttons P1 and the monitor 18 together form an outdoor user interface 14 (user interface). The outdoor station 1 further includes a speaker unit 19 (including a loudspeaker and a microphone) that allows the operator H1 to speak to his or her desired person who is operating the indoor station 2. The outdoor station 1 further includes a housing X1 (see FIG. 1) that houses or holds these constituent elements.

The housing X1 is formed in a generally compressed, rectangular parallelepiped box shape. As shown in FIG. 1, the housing X1 includes, on the front, a body cover X10 having a rectangular shape in a front view, and a decorative cover X11 having a rectangular frame shape and surrounding the body cover X10. The image capture device 11 is arranged to be exposed at the top center of the front surface of the body cover X10. The monitor 18 is arranged right under the image capture device 11 on the front surface of the body cover X10. The plurality of press buttons P1 are arranged under the monitor 18 on the front surface of the body cover X10.

The body cover X10 has a plurality of window holes X12 on the left of the image capture device 11 on its front surface. The window holes X12 are through holes to input the voice emitted by a person, who is speaking to the person on the indoor station 2 end (e.g., an operator H1), to the microphone of the speaker unit 19. The body cover X10 also has a plurality of acoustic holes X13 at the lower right corner of its front surface. The acoustic holes X13 are through holes, through which the voice received at the loudspeaker of the speaker unit 19 is output.

The image capture device 11 is a camera including an image sensor for capturing an image of a subject. In this example, the subject is supposed to be an operator H1 such as a visitor. In this embodiment, the image capturing area (field of view) of the image capture device 11 is set in front of the outdoor station 1 so as to capture an image of at least the face of the operator H1 who is operating the outdoor station 1 (more specifically, the outdoor user interface 14). In this embodiment, the image capture device 11 is a camera for shooting a moving picture. Furthermore, in this embodiment, the image capture device 11 is a camera for capturing a color image.

The image sensor may be a two-dimensional image sensor such as a charge coupled device (CCD) image sensor or a complementary metal-oxide semiconductor (CMOS) image sensor. The image capture device 11 has an incoming light beam, coming from the subject, incident on, and imaged through an optical system such as a lens on, an image capturing plane (photosensitive plane) of the image sensor and makes the image sensor convert the incident light into an electrical signal. Then, the image capture device 11 supplies an output signal (electrical signal) of the image sensor as a video signal to the video processor 15.

The outdoor transceiver 12 is a communications interface for communicating with an indoor station 2 designated by the operator H1 (hereinafter simply referred to as "the indoor station 2"). The outdoor transceiver 12 is connected to the controller 3 via the first main line 61. In FIG. 2A, the first main line 61 is indicated by a single solid line. The outdoor transceiver 12 is configured to communicate bidirectionally with the indoor station 2 via a communications device 32 of the controller 3. The outdoor transceiver 12 is configured to transmit a communications signal to the indoor station 2. Examples of the communications signals include an audio signal, a video signal, and a control signal. The outdoor transceiver 12 also receives a communications signal from the indoor station 2 via the communications device 32 and demodulates the communications signal thus received, thereby acquiring an audio signal or any other signal. The audio signal is output to the speaker unit 19 via the outdoor controller 13.

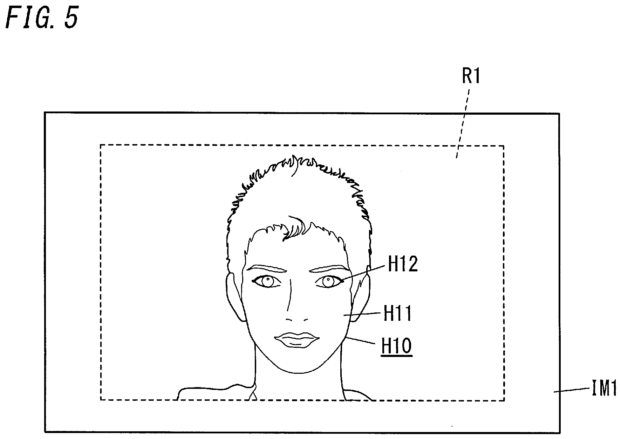

In addition, the outdoor transceiver 12 also serves as a communications device U1 according to this embodiment (see FIG. 2A). The communications device U1 is configured to be communicable with another telecommunications device D1. Under the control of the outdoor controller 13, the communications device U1 transmits, when finding a first condition (particular condition) satisfied, an image IM1 (see FIG. 5) of the human (operator H1) captured by the image capture device 11 to the other telecommunications device D1. In this embodiment, the other telecommunications device D1 corresponds to the indoor station 2. The image IM1 may be a still image, for example.

As already described in the "(1) Overview" section, the first condition is that at least a particular region H10 of the operator H1 should fall within a predetermined range R1 where the operator H1 is identifiable. In this example, the predetermined range R1 is supposed to be a range within the image IM1 captured by the image capture device 11. Also, the particular region H10 may cover the face region H11 of the operator H1, for example. Thus, in this embodiment, the first condition is that at least the face region H11 of the operator H1 should fall within the predetermined range R1 in the image M1. On finding the first condition satisfied, the outdoor transceiver 12 transmits the image IM1 to the designated indoor station 2 that the operator H1 is calling.

The outdoor user interface 14 is configured to receive an operating command entered by the human (operator H1). The outdoor user interface 14 is an input interface made up of the plurality of press buttons P1 (which is illustrated as a single block in FIG. 2A) and a touch-sensitive monitor 18 as shown in FIG. 1. The plurality of press buttons P1 includes numeric keys N1 of 0 through 9 (ten keys), an asterisk (*) key N2, a Delete key N3, a Call button N4, and four function buttons 140. For example, if the operator H1 wants to call, using this outdoor station 1, a resident of room (dwelling unit) #1024, then he or she needs to press the numeric keys N1 one by one to enter the room number. The room number entered is sequentially displayed one digit after another on the monitor 18 every time one numeric key N1 is pressed down. Finally, the operator H1 presses the Call button N4 to confirm the room number entered.

Nevertheless, the outdoor station 1 according to this embodiment does not automatically and unconditionally accept the call, initiated by the operator H1, for the indoor station 2 of the dwelling unit with room number 1024 (destination) whenever the Call button N4 is pressed down. Instead, the outdoor station 1 does accept the call only when the first condition is satisfied.

The video processor 15 is configured to receive a video signal from the image capture device 11 and process, by signal processing, video represented by the video signal. The video processor 15 may be implemented as, for example, a digital signal processor (DSP), a field-programmable gate array (FPGA), or any other suitable device.

The sensor 17 may be a pyroelectric infrared sensor, for example, and is configured to detect the presence of a human or any other target by sensing a variation caused in the quantity of infrared radiation by any movement of the human or any other target. The sensor 17 is not an indispensable element and may be omitted.

The outdoor controller 13 is implemented, for example, as a microcomputer including, as its major constituent elements, a central processing unit (CPU) and a memory. In other words, the microcomputer performs the function of the outdoor controller 13 by making its CPU execute a program stored in its memory. In this embodiment, the program executed by the CPU is stored in advance in the memory of the microcomputer. However, this is only an example and should not be construed as limiting. Alternatively, the program may also be distributed after having been stored on a non-transitory storage medium such as a memory card or downloaded via a telecommunications line such as the Internet.

The outdoor controller 13 is configured to control the image capture device 11 and outdoor transceiver 12. The outdoor controller 13 is also configured to control the video processor 15 and the monitor 18 as well.

The outdoor controller 13 controls the outdoor transceiver 12 to make the outdoor transceiver 12 transmit a communications signal to the indoor station 2 and receive a communications signal from the indoor station 2. Examples of the communications signals to the indoor station 2 include an audio signal, a video signal, and a control signal. Examples of the communications signals from the indoor station 2 include an audio signal and a control signal.

The outdoor controller 13 controls the video processor 15 to make the video processor 15 process the video represented by the video signal supplied from the image capture device 11. The video processed by the video processor 15 is transmitted from the outdoor transceiver 12 to the indoor station 2. Specifically, while the indoor station 2 designated by the operator H1 is being called and while the outdoor station 1 and the indoor station 2 are communicating with each other, the outdoor controller 13 transmits real-time video (moving picture) captured by the image capture device 11 to the indoor station 2. Meanwhile, on the indoor station 2 end, the real-time video from the image capture device 11 is displayed while the indoor station 2 is being called and while the resident is speaking to the operator H1. In the meantime, the image IM1 (still image) is also displayed, along with the real-time video, at a corner of the screen, for example.

The outdoor controller 13 is configured to perform any of various functions in accordance with the operating command received via the plurality of press buttons P1. Specifically, the outdoor controller 13 is configured to perform, in accordance with a guidance image being displayed on the monitor screen 180 of the monitor 18, a function corresponding to the guidance image. For example, on finding the numeric keys N1 operated while a guidance image prompting the operator H1 to enter a room number is being displayed on the monitor screen 180, the outdoor controller 13 shows the entered numerals one by one on the monitor screen 180.

Meanwhile, when any of the function buttons (or function keys) 140 receives an operating command, the outdoor controller 13 performs a predetermined function. For example, when the leftmost function button 140 is pressed, the outdoor controller 13 changes the language of the guidance information displayed from Japanese into English. Also, when the second function button 140 from the left end is pressed, the outdoor controller 13 calls the caretaker's room.

In this case, the outdoor controller 13 determines, during a series of operations performed by the operator H1 to call his or her designated indoor station 2, whether or not the first condition is satisfied, and switches the call decline state into the call accepted state only when finding the first condition satisfied. Note that when the indoor station 2 in the caretaker's room is called in response to the press of the function button 140, the call may be accepted directly with the determination about the first condition omitted.

The outdoor controller 13 further includes a guidance provider 131 and an alert provider 132 as shown in FIG. 2B. That is to say, the outdoor controller 13 has the functions of the guidance provider 131 and the alert provider 132. The function of the guidance provider 131 is providing guidance information that urges the operator H1 to face a predetermined direction (e.g., such that the operator H1 faces the outdoor station 1 squarely). The function of the alert provider 132 is providing alert information about a state where an operating command is entered through the outdoor user interface 14 with the first condition not satisfied.

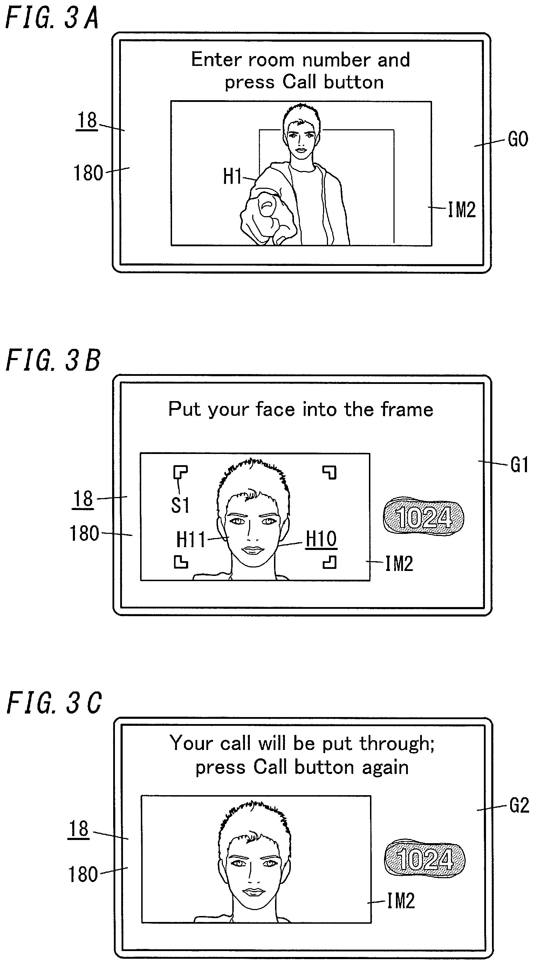

The outdoor controller 13 controls the image capture device 11 to make the image capture device 11 capture video. When the sensor 17 detects any human such as a visitor, for example, the outdoor controller 13 activates the image capture device 11 to start capturing video of the human. The outdoor controller 13 controls the monitor 18 to have the real-time video 1M2 (moving picture) being captured by the image capture device 11 superimposed on the guidance image presenting the room number entered and have such a synthetic image displayed on the monitor screen 180 (see FIG. 3A).

On detecting that the Call button N4 is pressed to confirm the room number entered, the guidance provider 131 outputs a guidance image (guidance information) with a text message saying "put your face into the frame" to the monitor screen 180 (see FIG. 3B). In addition, the guidance provider 131 also emits a voice message (guidance information) saying "turn your face this way and put your face into the frame" through the loudspeaker of the speaker unit 19. Furthermore, the guidance provider 131 further superimposes four indicators S1, indicating the predetermined range R1, on the image IM2. Each of these four indicators S1 is a generally L-shaped indicator.

The predetermined range R1 may be a rectangular range, for example. Therefore, the four indicators S1 are displayed so as to indicate the four corners of a rectangular frame corresponding to the peripheral edges of the predetermined range R1. However, the number and shape of the indicators S1 are not particularly limited. For example, the indicators S1 may also be two horizontal lines indicating the top and bottom edges of the predetermined range R1, two vertical lines indicating the right and left edges of the predetermined range R1, or an ellipse generally corresponding to a face profile. Still alternatively, the indicators S1 may also be displayed to indicate two diagonal corners.

Furthermore, the indicators S1 do not have to form a rectangular frame or a pair of lines prompting the operator H1 (such as a visitor) to put his or her face into, but may also be any other type of indicators prompting the operator H1 to put his or her face into the predetermined range R1. Specifically, the indicators S1 may also be a pair of arc indicators corresponding to the profiles of the head top and chin of the operator H1. This allows the size of the operator's H1 face image to be adjusted to the predetermined range R1 as well.

Optionally, besides being indicated by those indicators S1, the range recognized by the outdoor station 1 to be the operator's H1 face may also be rendered on the monitor screen 180 by profile curves, for example, so as to be fed back to the operator H1. This allows the operator H1 to put his or her face easily into the predetermined range R1 indicated by the indicators S1 while looking, on the monitor screen 180, at the profile curves representing the range recognized to be his or her face by the outdoor station 1.

Superimposing such indicators S1 on the video IM2 in this manner allows the operator H1 to visually recognize the predetermined range R1, thus further increasing the chances of the particular region H10 falling within the image IM1.

The outdoor controller 13 determines whether or not the image IM1 captured by the image capture device 11 satisfies the first condition. The determination period during which this determination processing is performed may have a maximum duration of 30 seconds, for example. The determination period may begin, for example, when the indicators S1 appear on the monitor screen 180. When a determination is made, in the middle of the determination period, that the first condition should be satisfied, the determination processing may end at that timing, even if the 30 second determination period has not passed yet.

Optionally, the outdoor controller 13 (or the video processor 15) may divide the video IM2 (moving picture) shot since the beginning of the determination period into a plurality of video frames and extract those video frames as a series of still images IM1. On finding at least one of those images IM1 satisfying the first condition, the outdoor controller 13 determines that the first condition should be satisfied. If multiple images IM1 satisfy the first condition, the best one of the images IM1 may be selected appropriately.

On finding the first condition satisfied, the outdoor controller 13 displays a guidance image with a text message saying "your call will be put through; press Call button once again" on the monitor screen 180 (see FIG. 3C) and also emits a voice message to the same effect through the loudspeaker of the speaker unit 19. Then, the outdoor controller 13 switches the call declined state into the call accepted state.

When finding the Call button N4 pressed once again in the call accepted state, the outdoor controller 13 allows the designated indoor station 2 to be called. In addition, on finding the first condition satisfied, the outdoor controller 13 hides the indicators S1 that have been shown on the monitor 18 (see FIG. 3C). In addition, the outdoor controller 13 has the image IM1 satisfying the first condition (see FIG. 5) stored in the storage device 16 and further transfers the image IM1 to the indoor station 2.

On the other hand, while the first condition is not satisfied, the outdoor controller 13 maintains the call declined state. On detecting that the Call button N4 is pressed during the determination period even though the call is declined, the alert provider 132 provides alert information to that effect. Likewise, if the call is still declined even after the determination period is over, it is also recommended that the alert provider 132 provide the alert information.

In that case, the alert provider 132 provides alert information as text and voice messages saying "your call will not be put through" or "put your face into frame once again" displayed on the monitor screen180 and emitted through the loudspeaker of the speaker unit 19, respectively. The alert provider's 132 providing such alert information tells the operator H1 that the operating command to call his or her designated resident has been declined.

If the determination about the first condition has failed, then the outdoor controller 13 continues to display the indicators S1 and starts the determination processing all over again (see FIG. 3B). When finding the first condition still not satisfied even if the same determination is repeatedly performed a predetermined number of times (e.g., three times), the outdoor controller 13 may abort the determination processing and display an error message on the monitor screen 180. In addition, the outdoor controller 13 may also notify the controller 3 or indoor station 2 in the caretaker's room, the indoor station 2 designated by the operator H1, or an external surveillance server (not shown) of the error.

The storage device 16 may be implemented as a memory on which both read and write operations are enabled. The storage device 16 may be a flash memory, for example. The storage device 16 stores the image IM1 and video IM2 captured by the image capture device 11. In this embodiment, the storage device 16 is provided outside of the outdoor controller 13. However, this is only an example and should not be construed as limiting. Alternatively, the storage device 16 may be provided inside of the outdoor controller 13. That is to say, the storage device 16 may be a built-in memory of the outdoor controller 13.

The monitor 18 includes a monitor screen 180 implemented as, for example, a touch-sensitive LCD panel. The monitor 18 forms part of the outdoor user interface 14, as described above. Under the control of the outdoor controller 13, the monitor 18 outputs (i.e., displays as images) a home guidance image G0 and first to fourth guidance images G1-G4 as shown in FIGS. 3A-4B. The home guidance image G0 is an image prompting the visitor to enter information indicating his or her designated resident to call (i.e., room number) and press the Call button N4 for the first time. The first guidance image G1 is an image prompting the operator H1 to put his or her face region H11 into the predetermined range R1. The second guidance image G2 is an image prompting the operator H1 to press the Call button N4 for the second time. The third guidance image G3 is an image telling the operator H1 that the indoor station 2 designated by him or her (destination) is now being called. The fourth guidance image G4 is an image indicating that the operator H1 of the outdoor station 1 is now speaking with the resident who operates the indoor station 2. Note that these guidance images G0-G4 are only examples. The types, number, and contents of the guidance images are not particularly limited.

### (2.3) Configuration of indoor station

Next, a configuration for the indoor stations 2 will be described. Each indoor station 2 includes an indoor transceiver 21, a monitor 22, an indoor controller 23, an indoor user interface 24, a video processor 25, a storage device 26, and a signaling device 27 as shown in FIG. 2A. The indoor station 2 further includes a speaker unit 29 (including a loudspeaker and a microphone) that enables the resident to speak to the operator H1 who is operating either the outdoor station 1 or a doorphone 4 associated with the indoor station 2 (hereinafter simply referred to as "the doorphone 4").

The indoor transceiver 21 is a communications interface for communicating with the outdoor station 1 and the doorphone 4. The indoor transceiver 21 is connected to the controller 3 via the second main line 62, the branch line 63, and the splitter 5. In FIG. 2A, the second main line 62 and the branch line 63 are each indicated by a single solid line. The indoor transceiver 21 is configured to communicate bidirectionally with the outdoor station 1 via the communications device 32 of the controller 3. The indoor transceiver 21 is configured to transmit a communications signal to the outdoor station 1. Examples of the communications signals include an audio signal and a control signal. The indoor transceiver 21 also receives a communications signal from the outdoor station 1 via the communications device 32 and demodulates the communications signal thus received, thereby acquiring an audio signal, a video signal, or any other signal. The audio signal is output to the speaker unit 29 via the indoor controller 23. The video signal is output to the monitor 22 via the indoor controller 23.

The monitor 22 is configured to display the video provided by the video processor 25 (such as the video captured by the image capture device 11 of the outdoor station 1). The monitor 22 is also configured to display the image IM1 captured by the image capture device 11 of the outdoor station 1 and satisfying the first condition. The monitor 22 may be implemented as an LCD, for example. If the indoor station 2 includes a touchscreen display, then the touchscreen display may serve as both the monitor 22 and the indoor user interface 24.

The indoor user interface 24 is configured to accept an operating command entered by a human (such as the resident of the dwelling unit). When a predetermined type of operation (such as a press operation) is performed on the indoor user interface 24 while the indoor transceiver 21 is receiving a call signal to call the resident, the operator H1 and the resident are enabled to speak to each other over the outdoor station 1 and the indoor station 2.

The video processor 25 is configured to be supplied with the video signal received at the indoor transceiver 21 from the outdoor station 1 and process, by signal processing, the video represented by the video signal. For example, the video processor 25 may be configured to perform synthesis processing of synthesizing multiple video frames together. The video processor 25 may be implemented as, for example, a device such as a DSP or an FPGA.

The indoor controller 23 may be implemented as a microcomputer including a CPU and a memory as its major constituent elements. In other words, the microcomputer performs the function of the indoor controller 23 by making the CPU execute a program stored in the memory. In this embodiment, the program to be executed by the CPU is stored in advance in the memory of the microcomputer. However, this is only an example and should not be construed as limiting. Alternatively, the program may also be distributed after having been stored on a non-transitory storage medium such as a memory card or downloaded via a telecommunications line such as the Internet.

The indoor controller 23 is configured to control the indoor transceiver 21 and the monitor 22. The indoor controller 23 is also configured to control the video processor 25 as well. The indoor controller 23 controls the indoor transceiver 21 to make the indoor transceiver 21 transmit a communications signal to the outdoor station 1 and receive a communications signal from the outdoor station 1. Examples of the communications signals to the outdoor station 1 include an audio signal and a control signal. Examples of the communications signals from the outdoor station 1 include an audio signal, a video signal, and a control signal. The indoor controller 23 controls the monitor 22 to make the monitor 22 display the video transmitted from the outdoor station 1.

The storage device 26 may be implemented as a memory on which both read and write operations are enabled. The storage device 26 may be a flash memory, for example. The storage device 26 stores the video transmitted from the outdoor station 1. In this embodiment, the storage device 26 is provided outside of the indoor controller 23. However, this is only an example and should not be construed as limiting. Alternatively, the storage device 26 may be provided inside of the indoor controller 23. That is to say, the storage device 26 may be a built-in memory of the indoor controller 23.

The signaling device 27 is configured to emit a calling sound, for example. When called by the outdoor station 1, the indoor controller 23 makes the signaling device 27 emit a calling sound at a predetermined timing. In other words, when called by the outdoor station 1, the indoor controller 23 makes the signaling device 27 perform a signaling operation to signal that the outdoor station 1 is calling. Optionally, the signaling device 27 may also be configured to emit a voice message instead of the calling sound.

### (2.4) Configuration for controller

Next, a configuration for the controller 3 will be described. The controller 3 includes a signal processor 31 and a communications device 32 as shown in FIG. 2A.

The communications device 32 is a communications interface for communicating with the outdoor station 1 and the indoor stations 2. The communications device 32 is connected to the outdoor station 1 via the first main line 61. The communications device 32 is also connected to the indoor stations 2 via the second main line 62, the branch lines 63, and the splitters 5. The communications device 32 is configured to communicate bidirectionally with the outdoor transceiver 12 of the outdoor station 1. Likewise, the communications device 32 is also configured to communicate bidirectionally with the indoor transceivers 21 of the indoor stations 2. That is to say, the communications device 32 is configured to relay communications between the indoor transceivers 21 and the outdoor transceiver 12. Thus, the communications device 32 relays the communications signal from the outdoor transceiver 12 of the outdoor station 1 to the plurality of indoor stations 2. In this case, the communications signal transmitted from the outdoor station 1 includes information (such as an address) identifying an indoor station 2 as the destination. That is why among the plurality of indoor stations 2, only the indoor station 2, of which the assigned address matches the address included in the communications signal, is qualified to receive the communications signal. The communications device 32 also relays communications signals transmitted from the respective indoor stations 2 to the outdoor station 1.

The signal processor 31 may be implemented as a microcomputer including a CPU and a memory as its major constituent elements. In other words, the microcomputer performs the function of the signal processor 31 by making the CPU execute a program stored in the memory. In this embodiment, the program to be executed by the CPU is stored in advance in the memory of the microcomputer. However, this is only an example and should not be construed as limiting. Alternatively, the program may also be distributed after having been stored on a non-transitory storage medium such as a memory card or downloaded via a telecommunications line such as the Internet.

The signal processor 31 is configured to control the communications device 32. Specifically, the signal processor 31 controls the communications device 32 to make the communications device 32 transmit, to the plurality of indoor stations 2, the communications signal received from the outdoor station 1 and also transmit, to the outdoor station 1, the communications signals received from the plurality of indoor stations 2.

### (2.5) Operation of intercom system

Next, it will be described with reference to FIGS. 3A-6 how the intercom system 10 operates.

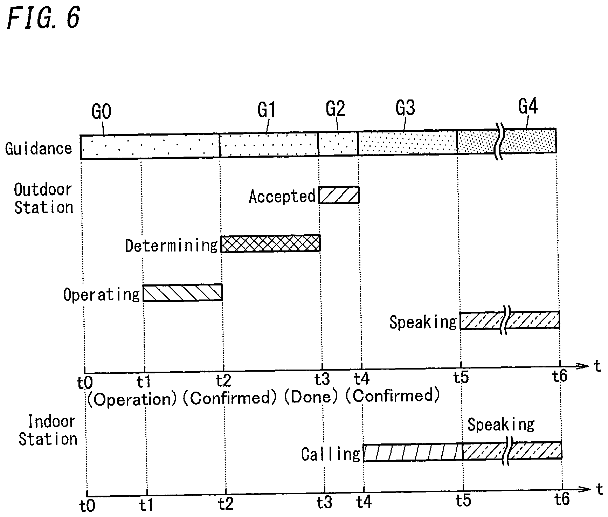

First of all, when the sensor 17 of the outdoor station 1 detects a visitor at a time t0 (see FIG. 6), the outdoor station 1 activates the image capture device 11 to have the home guidance image G0 shown in FIG. 3A displayed on the monitor screen 180 of the monitor 18. The home guidance image G0 includes text guidance information prompting the visitor to enter the room number and press the Call button N4. In addition, real-time video IM2 of the visitor him- or herself is superimposed on the home guidance image G0.

Suppose at a time t1 shown in FIG. 6, the visitor starts entering the room number (e.g., #1024 in the example illustrated on the drawings) using the outdoor user interface 14 in accordance with the home guidance image G0 and the voice guidance. The time t1 is a point in time when an operating command is entered into the outdoor user interface 14 for the first time. In this example, the time t1 is a time when the numeric key N1 of 1 is pressed first. Thereafter, when the operator H1 (or visitor) presses the Call button N4 for the first time at a time t2 shown in FIG. 6, the room number entered is confirmed. In response, the outdoor station 1 changes the screen images from the home guidance image G0 into the first guidance image G1 shown in FIG. 3B. In addition, the outdoor station 1 also starts determining whether or not the first condition is satisfied.

In accordance with the first guidance image G1 and the voice guidance, the operator H1 faces the outdoor station 1 squarely to adjust his or her face H11 orientation. Specifically, the operator H1 places him- or herself in position, while looking at the real-time video IM2 and four indicators S1 displayed on the monitor screen 180, such that his or her own face region H11 falls within the range defined by the four indicators S1. In this case, the image capture device 11 is located right over the monitor 18. Therefore, if the operator H1 is facing the monitor 18 squarely, then he or she is also facing the image capture device 11 generally squarely.

When determining, at a time t3 shown in FIG. 6, that the first condition should be satisfied (determination done), the outdoor station 1 ends the determination processing to switch the state into the call accepted state. In addition, the outdoor station 1 also changes the images on the monitor screen 180 from the first guidance image G1 into the second guidance image G2 shown in FIG. 3C.

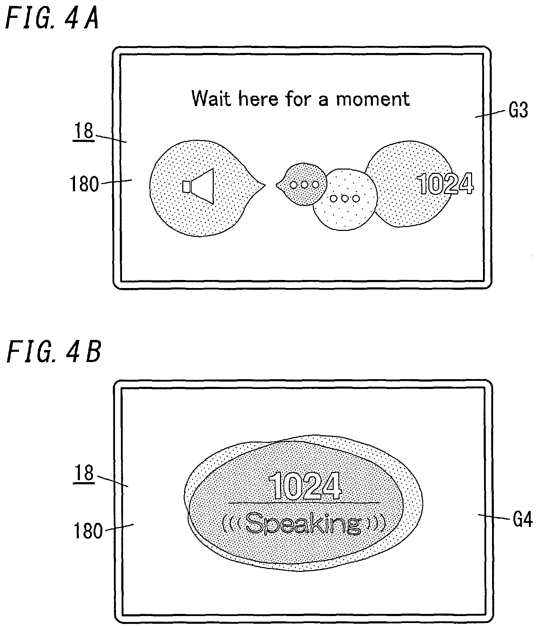

When the operator H1 presses the Call button N4 for the second time at a time t4 shown in FIG. 6 in accordance with the second guidance image G2 and the voice guidance, the outdoor station 1 changes the images on the monitor screen 180 from the second guidance image G2 into the third guidance image G3 shown in FIG. 4A. In addition, the outdoor station 1 allows the indoor station 2 of the room with #1024 as the designated room to be called. The third guidance image G3 presents a text message saying "wait here for a moment" to the operator H1. Meanwhile, in the designated indoor station 2, the calling sound starts to be emitted at the time t4. At this time, the outdoor station 1 transfers the image IM1 satisfying the first condition to the indoor station 2. In addition, the outdoor station 1 continues to transmit, to the indoor station 2, the real-time video captured by the image capture device 11. In response, the indoor station 2 emits the calling sound while displaying the image IM1 and the real-time video on the monitor 22.

Suppose at a time t5, the resident of the room #1024 called by the operator H1 responds to the call using the indoor station 2. Then, the resident and the operator H1 start speaking to each other over the outdoor station 1 and the indoor station 2, when the outdoor station 1 changes the images on the monitor screen 180 from the third guidance image G3 into the fourth guidance image G4 shown in FIG. 4B. In the example illustrated in FIG. 6, speaking is carried out from the time t5 to a time t6 between the resident and the operator H1. Even while they are speaking to each other, the indoor station 2 continues to display the image IM1 and the real-time video on the monitor 22.

As can be seen from the foregoing description, the outdoor station 1 according to this embodiment determines, during the series of operations performed by the operator H1 to call the designated indoor station 2, whether or not the first condition is satisfied, and accepts the call only when finding the first condition satisfied. Thus, compared with just calling the indoor station 2 without making the determination whether or not the first condition is satisfied, this increases the chances of the image IM1 shooting a particular region H10 such as the face region H11. This allows a highly reliable image IM1 to be transmitted to the indoor station 2. This makes it much easier for the resident called to identify or recognize the visitor (operator H1) calling him or her by looking at the image IM1 displayed on the monitor 22 while the visitor is calling him or her, for example. Consequently, this improves the reliability of person (such as the person who is operating the user interface) identification.

In particular, the guidance provider 131 providing guidance information prompting the operator H1 to face a predetermined direction (e.g., such that the operator H1 faces the outdoor station 1 squarely) increases the chances of the operator H1 facing the predetermined direction. This increases the chances of the image IM1 covering a particular region H10 such as the face region H11 being obtained. This further improves the reliability of person identification.

In addition, according to this embodiment, the operating command is entered to call a particular indoor station 2. Thus, unless the first condition is satisfied, the call is not accepted. This further improves the reliability of person identification.

Furthermore, according to this embodiment, when finding the first condition satisfied, the monitor 18 hides, under the control of the outdoor controller 13, the indicators S1 that have been displayed on the monitor screen 180. This allows the operator H1 to visually recognize that the first condition is satisfied. This increases the handiness of this intercom door station as well.

### (3) Variations

The embodiment described above is only one of various embodiments of the present disclosure, and may be readily modified, changed, replaced, or combined with any other embodiments, depending on a design choice or any other factor. Also, the same function as that of the outdoor controller 13 according to the embodiment described above may also be implemented as a method for controlling an intercom door station (outdoor station 1), a computer program, or a non-transitory storage medium that stores the computer program thereon, for example.

Next, variations of the embodiment described above will be enumerated one after another. Note that any of the variations to be described below may be combined as appropriate. In the following description, the exemplary embodiment described above will be sometimes referred to as a "basic example."

The outdoor station 1 according to the present disclosure includes a computer system in its outdoor controller 13, for example. The computer system may include, as principal hardware components, a processor and a memory. The functions of the outdoor controller 13 according to the present disclosure may be performed by making the processor execute a program stored in the memory of the computer system. The program may be stored in advance in the memory of the computer system. Alternatively, the program may also be downloaded through a telecommunications line or distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips without limitation. Those multiple chips may be integrated together in a single device or distributed in multiple devices without limitation.

Also, in the embodiment described above, the outdoor station 1 is implemented as a single device with various functions thereof integrated together in a single housing. However, this is only an example and should not be construed as limiting. Alternatively, those functions of the outdoor station 1 may be distributed in multiple different devices. Still alternatively, at least some functions of the outdoor station 1 (such as that of the outdoor controller 13) may be implemented as a cloud computing system as well. Conversely, all of those functions of the outdoor station 1 may also be integrated together in a single housing as in the embodiment described above.

### (3.1) First variation

In the basic example described above, only the first condition is set with respect to the outdoor station 1 on the supposition that no image-based authentication is made. In the first variation to be described below, both the first condition and the second condition are set with respect to the outdoor station 1 to make the image-based authentication. The second condition is that the operator H1 should be successfully authenticated based on information about the particular region H10, as already described in the "(1) Overview" section. In the following example, the second condition is that the human (operator H1) should be successfully authenticated based on information about the particular region H10 in the image IM1.

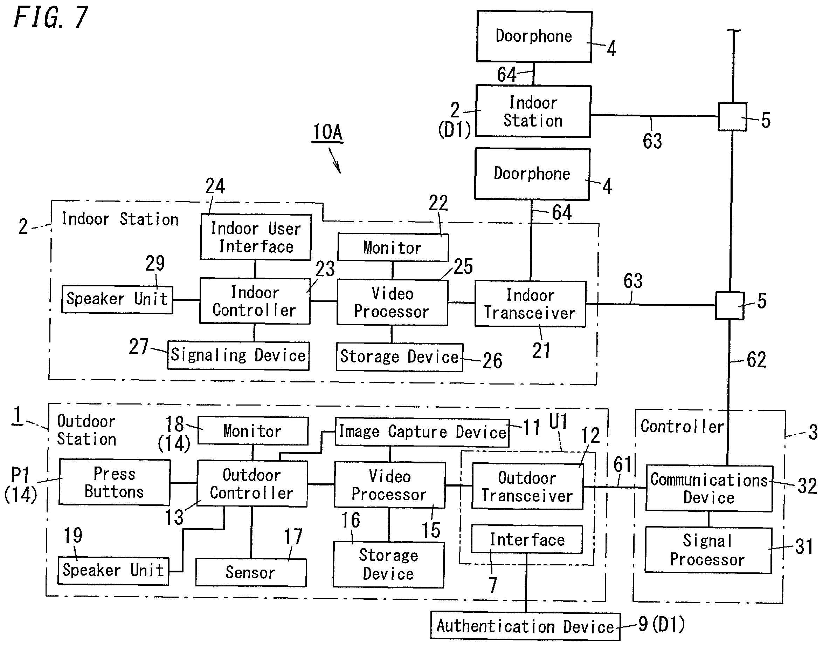

FIG. 7 illustrates an intercom system 10A according to a first variation. This intercom system 10A further includes an authentication device 9, which is a major difference from the intercom system 10 of the basic example. In addition, the communications device U1 of the outdoor station 1 of this intercom system 10A includes not only the outdoor transceiver 12 but also an interface 7 with the ability to communicate with the authentication device 9, which is a major difference from the outdoor station 1 of the basic example.

The interface 7 is a communications interface for communicating with the authentication device 9 either via cables or wirelessly. The communications device U1 including the interface 7 and the outdoor transceiver 12 is configured to be communicable with at least one other telecommunications device D1. In this variation, the at least one other telecommunications device D1 includes the plurality of indoor stations 2 and the authentication device 9 as shown in FIG. 7.

In this variation, the authentication device 9 is supposed to be an authentication server to be installed in the caretaker's room, or outside, of a multi-family dwelling house, for example. However, this is only an example and should not be construed as limiting. Alternatively, the authentication device 9 may also be a device which is installed, as well as the outdoor station 1, in a common area such as a lobby of a multi-family dwelling house to perform authentication processing before locking and unlocking an electric lock device (not shown) provided for a main entrance door in the vicinity of the outdoor station 1. Still alternatively, the authentication device 9 may also be built in the outdoor station 1. Yet alternatively, the authentication device 9 may also be built in each of the indoor stations 2. If the authentication device 9 is built in each indoor station 2, the interface 7 may be omitted.

The authentication device 9 stores, in advance, reference images to be compared with the image IM1 transferred from the outdoor station 1. The reference images suitably include face images of the resident's family members or acquaintances, for example. Optionally, the reference images may be captured in advance by the image capture device 11 of the outdoor station 1 and registered with the authentication device 9. For example, the reference images may be registered with the authentication device 9 from the outdoor station 1 by entering, through the outdoor station 1, a particular operating command with so high a security level that no other person can ever detect. Alternatively, the reference images may also be once transferred from the outdoor station 1 to the indoor station 2 of each resident and then registered with the authentication device 9 through operations performed on the indoor station 2. Still alternatively, face images captured by a camera built in a smartphone or any other telecommunications device carried by each resident may also be registered as the reference images with the authentication device 9 via the indoor station 2, for example. In that case, dedicated application software that allows the smartphone or any other telecommunications device to communicate wirelessly with the indoor station 2 is suitably installed in the telecommunications device.

In this variation, the outdoor controller 13 determines, during a series of operations to be performed by the operator H1 to call a particular indoor station 2, whether or not at least one of the first condition or the second condition is satisfied, and switches, when finding the first condition or the second condition satisfied, the call declined state into the call accepted state.

First, the outdoor controller 13 may determine whether or not the first condition is satisfied (first determination processing). In the first determination processing, the particular condition includes only the first condition. When finding the first condition (particular condition) satisfied, the outdoor controller 13 switches the call declined state into the call accepted state without determining whether or not the second condition is satisfied.

On the other hand, when finding the first condition never satisfied even after the first condition determination period has passed, the outdoor controller 13 starts determining whether or not the second condition is satisfied (second determination processing). In the second determination processing, the particular condition includes only the second condition. Then, the outdoor controller 13 transfers the image(s) IM1 captured during the first condition determination period to the authentication device 9.

The authentication device 9 may perform, for example, face authentication processing using the image(s) IM1 and the preregistered reference images. Specifically, the authentication device 9 searches the reference images for any image matching the face features of the operator H1 shot in the image IM1 and returns the result (authentication result) to the outdoor station 1. On receiving, from the authentication device 9, an authentication result indicating that the operator H1 has been authenticated successfully (i.e., there is a reference image matching the operator's H1 face image), the outdoor controller 13 determines that the second condition (particular condition) should be satisfied and switches the call declined state into the call accepted state.

In short, if the first condition is satisfied, the call is accepted without the authentication processing. On the other hand, unless the first condition is satisfied, the call is accepted only when the operator H1 turns out to be any one of the resident's family members or acquaintances.

In this variation, when finding the first condition satisfied, the outdoor station 1 may store, in the storage device 16, the best image IM1 as a new reference image to be potentially used in the authentication processing in the future and transfer such an image to the indoor station 2. As used herein, the "authentication processing in the future" may be the authentication processing to determine whether or not to accept the call or a totally different type of authentication processing such as the one to determine whether or not to unlock the electric lock device, for example. In any case, the resident may determine, on the indoor station 2, whether or not the image transferred from the outdoor station 1 can be a reference image and either discard it or register it with the authentication device 9. In short, the reference images may be accumulated through the outdoor station 1.

Alternatively, the outdoor controller 13 may make determination about the second condition first, and then make determination about the first condition. Optionally, only the second condition may be set with respect to the outdoor station 1. In that case, the operator's H1 call is accepted only when the operator H1 turns out to be any of the resident's family members or acquaintances, whose face images are preregistered as reference images. The decision about whether only either, or both, of the first and second conditions should be set is suitably changeable according to the environment where the outdoor station 1 is installed or at the resident's request.

In the foregoing description, in each of the first and second determination processing, the particular condition may include only the first condition or only the second condition. However, this is only an example and should not be construed as limiting. Alternatively, the particular condition may include both of the first and second conditions. That is to say, the call may be accepted when both of the first and second conditions are satisfied.

The configuration according to this variation improves the reliability of person (such as the person who is operating the user interface) identification as well as in the basic example.

### (3.2) Second variation

In the basic example described above, the outdoor user interface 14 (user interface) is made up of the plurality of press buttons P1 and the touch-sensitive monitor 18. Also, in the basic example described above, the call is made by pressing the plurality of press buttons P1, namely, the numeric keys N1 of 0 through 9, the Call button N4, and other buttons.

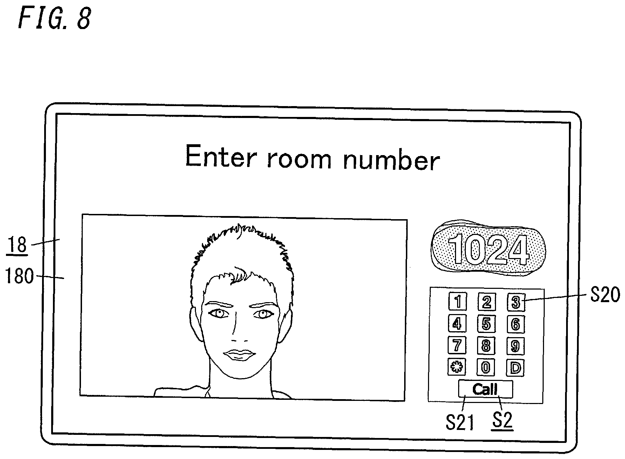

In this variation, at least the Call button N4 is omitted out of the plurality of press buttons P1 according to the basic example. Instead of using the Call button N4, the monitor 18 according to this variation is configured to display a touch-sensitive operating area S2 as an image and receiving, as an operating command, a touch command on the touch-sensitive operating area S2 (see FIG. 8).

In this variation, the plurality of press buttons P1 according to the basic example, namely, the numeric keys N1 of 0 through 9, the asterisk key N2, the Delete key N3, and the Call button N4, are replaced with a plurality of touch-sensitive operating areas S2 corresponding to these buttons and keys and displayed as an image on the monitor 18. For example, when a touch command is entered with fingertips, for example, on the touch-sensitive operating areas S20 corresponding to the numeric keys N1 of 0 through 9 according to the basic example, the same function as that of the numeric keys N1 (i.e., entry of a room number) is performed. On the other hand, when a touch command is entered on the touch-sensitive operating area S21 corresponding to the Call button N4 according to the basic example, the same function as that of the Call button N4 according to the basic example (i.e., confirmation of the room number entered or call) is performed.

In this variation, the Call button operating area S21 is hidden behind the monitor 18 before a particular condition is satisfied, and is shown on the monitor 18 when the particular condition is satisfied. As used herein, the "hidden" state may naturally refer to a blank state where no operating area S21 is displayed but may also refer to any other state that visually indicates that the operating area S21 will remain inactive even when pressed by the operator H1. Specifically, the operating area S21 may be displayed in the "hidden" state as an image in a dark color and displayed as an image in a bright color when the particular condition is satisfied. Alternatively, character information such as "disabled" may be displayed on the operating area S21 in the "hidden" state and may disappear when the particular condition is satisfied.

Optionally, the touch-sensitive operating areas S20 corresponding to the numeric keys N1 may also be hidden and shown synchronously with the touch-sensitive operating area S21.

The configuration according to this variation reduces the chances of the outdoor user interface 14 being operated in vain even though the operating command is not accepted, thus improving the handiness of the intercom door station 1.

### (3.3) Third variation

According to the basic example, the first condition is that at least the operator's H1 face region H11 should fall within the predetermined range R1 in the image IM1. According to this variation, on the other hand, the first condition is that the operator's H1 face region H11 and line of sight should both fall within the predetermined range R1, which is a major difference from the basic example.

FIG. 9 illustrates an intercom system 10B according to a third variation. The outdoor station 1 of this intercom system 10B further includes an eye detector 8 for detecting the line of sight of the human (operator H1), which is a major difference from the outdoor station 1 of the intercom system 10 according to the basic example.

The eye detector 8 is supposed to be a line of sight sensor with a camera. The camera may be either provided separately from, or the same as, the image capture device 11 according to the basic example. The camera may be a visible camera or an infrared camera without limitation. In the case of an infrared camera, the eye detector 8 further includes an infrared point light source. In that case, the eye detector 8 arbitrarily extracts a reference point (such as the inner corner of an eye) and a moving point (such as an iris) from the image data captured by the camera and detects the line of sight based on the positional relation between the reference point and the moving point.

When making determination about the first condition, the outdoor controller 13 determines whether or not the operator's H1 face region H11 falls within the predetermined range R1 and further determines, based on the result of detection by the eye detector 8, which direction the operator's H1 line of sight points. When finding the face region H11 and the line of sight of the operator H1 both falling within the predetermined range R1, the outdoor controller 13 determines that the first condition should be satisfied. Optionally, when finding the line of sight of the operator H1 falling outside of the predetermined range R1, the guidance provider 131 of the outdoor controller 13 may output guidance information to prompt the operator H1 to face the outdoor station 1 squarely.

This configuration reduces the chances of the face region H11 of the image IM1 captured representing a person who is looking down, even when the face region H11 falls within the predetermined range R1. In addition, this configuration also increases the chances of acquiring information about the eyes H12 of the operator H1 (such as an eye image), thus further improving the reliability of person identification. This allows such a piece of information to be applied to iris authentication, for example.

Optionally, the outdoor controller 13 may display the light of sight of the operator H1, which is detected by the eye detector 8, as a dot mark, for example, on the monitor 18 to make the line of sight trackable.

### (3.4) Fourth variation

In the basic example described above, the operating command is accepted when the Call button N4 is pressed to confirm the call. However, this is only an example and should not be construed as limiting. Alternatively, the operating command may also be accepted when the numeric keys N1 are pressed one digit after another to enter the room number, for example.

In this variation, the determination processing about the first condition is performed before the home guidance image G0 is displayed to prompt the operator H1 to enter the room number. When the sensor 17 detects any human such as a visitor, the outdoor station 1 activates the image capture device 11 to start capturing an image of the human and emits the guidance information as a voice message saying "turn your face this way and put your face into the frame." Then, when finding the first condition satisfied, the outdoor station 1 enables the operator H1 to enter the room number.

In this case, in a situation where the image-based authentication is performed as in the first variation, when the result of authentication by the authentication device 9 indicates that the operator H1 is the resident him- or herself or any of his or her family members, the outdoor station 1 may transmit an unlocking signal to unlock the electric lock device on the door of the main entrance. In that case, the outdoor station 1 may make the determination about the second condition before making the determination about the first condition. Note that according to this variation, a face image of the resident him- or herself or any of his or her family members is suitably preregistered as a reference image with the authentication device 9.

### (3.5) Fifth variation (unlocking electric lock device: Part I)

In the basic example and first to fourth variations described above, the determinations about the first condition and the second condition are made whether or not "to accept the operating command." However, the determinations about the first condition and the second condition do not have to be made whether or not "to accept the operating command" but may also be made whether or not "to unlock the electric lock device."

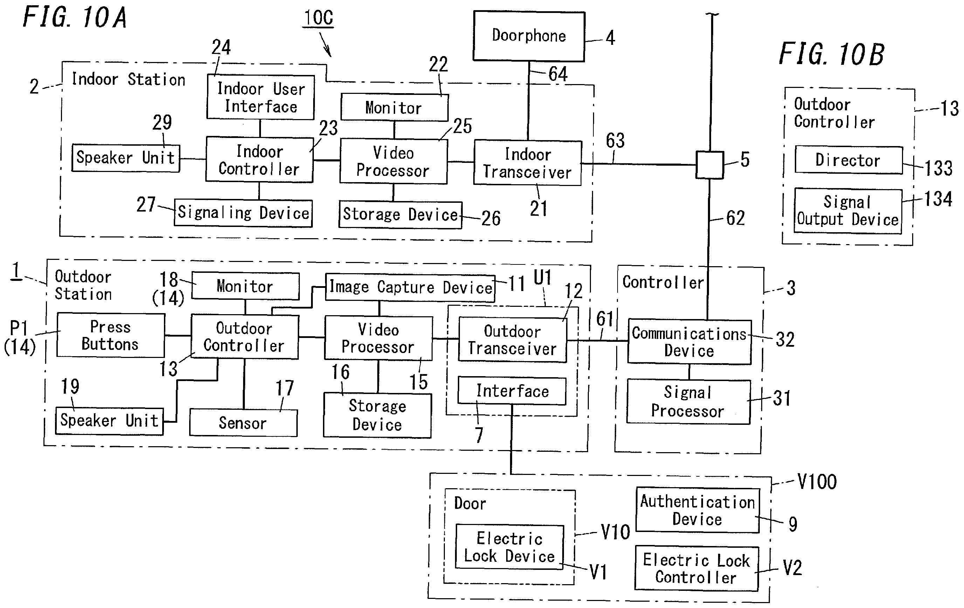

The fifth variation will be described with reference to FIGS. 10A and 10B.

The intercom system 10C according to this variation includes an outdoor station 1, a plurality of indoor stations 2 (only one of which is shown in FIG. 10A), a controller 3, a plurality of doorphones 4 (only one of which is shown in FIG. 10A), a plurality of splitters 5 (only one of which is shown in FIG. 10A), and an electric lock system V100. The electric lock system V100 includes an electric lock device V1 installed on a door V10 of the common main entrance in the vicinity of the outdoor station 1, an authentication device 9, and an electric lock controller V2. The authentication device 9 according to this variation is supposed to have approximately the same functions as the authentication device 9 already described for the first variation, for example. In this variation, the authentication device 9 is one of constituent elements of the electric lock system V100. However, this is only an example and should not be construed as limiting. Alternatively, the authentication device 9 may also be built in either the outdoor station 1 or any of the indoor stations 2. Still alternatively, the authentication device 9 may be an external authentication server as well.

The outdoor controller 13 of the outdoor station 1 according to this variation includes a director 133 and a signal output device 134 as shown in FIG. 10B. That is to say, the outdoor controller 13 has the function of the director 133 and the function of the signal output device 134.

The outdoor station 1 according to this variation further includes an interface 7. The interface 7 is a communications interface for communicating either wirelessly or via cables with the authentication device 9 and the electric lock controller V2.

The function of the director 133 is giving the human a direction about what to do to satisfy the first condition. The director 133 provides guidance information to prompt the human to face a predetermined direction just like the guidance provider 131 of the basic example. Specifically, the director 133 may emit a voice message saying "turn your face this way and put your face into the frame" through the loudspeaker of the speaker unit 19. In addition, the director 133 may also have the indicators S1, indicating the predetermined range R1, displayed on the monitor 18. Meanwhile, the function of the signal output device 134 is generating an electrical signal, unlocking the electric lock device V1 when finding the second condition satisfied, and outputting the signal through the interface 7 to the electric lock controller V2.

The intercom system 10C according to this variation does not always operate on the premise that the operating command to call a designated resident is entered, unlike the basic example and the first to fourth variations. Therefore, according to this variation, the "human" may be not only the visitor but also any other human who does not plan to enter any operating command to call someone such as a resident.

Next, it will be described how the intercom system 10C according to this variation operates.

When the sensor 17 detects any human, the outdoor station 1 activates the image capture device 11 to start capturing an image IM1 of the human and makes the director 133 give the human a direction. In this case, the outdoor station 1 also determines, as in the basic example, whether or not the first condition is satisfied (i.e., whether or not the human's face image falls within the predetermined range R1). Then, when finding the first condition satisfied, the outdoor station 1 transmits the image IM1 to the authentication device 9. Subsequently, the outdoor station 1 determines, based on the result of authentication obtained from the authentication device 9, whether or not the second condition is satisfied (i.e., whether the human is authenticated successfully to be any of the preregistered persons).

When finding the second condition satisfied (i.e., when the human is authenticated successfully), the outdoor station 1 outputs an electrical signal, unlocking the electric lock device V1, to the electric lock controller V2. On receiving the electrical signal from the outdoor station 1, the electric lock controller V2 performs a control operation to unlock the electric lock device V1. Specifically, the electric lock controller V2 outputs a drive signal, driving a dead bolt of the electric lock device V1 to an unlocked position, to a driver circuit for the electric lock device V1.

This configuration improves the reliability of person identification. Particularly if the "human" is either the resident him- or herself or any of his or her family members or acquaintances and if the reference images of those people are preregistered with the authentication device 9, then this saves them the trouble of entering the operating command into the outdoor station 1, thus improving the handiness as well. Note that, also in this variation, the monitor 18 is preferably configured to superimpose the indicator S1, indicating the predetermined range R1, on the real-time video IM2. The monitor 18 is preferably configured to hide the indicator S1 when finding the particular condition (including at least one of the first condition or the second condition) satisfied. Furthermore, also in this variation, the alert provider 132 is preferably configured to provide, when the operating command is entered through the user interface 14 in a state where the particular condition (including at least one of the first condition or the second condition) is not satisfied, alert information about the state.

### (3.6) Sixth variation (unlocking electric lock device: Part II)

According to the fifth variation, if the "human" is a person who plans to enter the operating command to call someone (such as a visitor), then it is highly likely that the processing of determining whether or not to unlock the electric lock device V1 will be performed in vain. Thus, to avoid such a situation, the outdoor station 1 according to this variation is configured to receive the operating command to call someone before making determination about the first and second conditions according to the fifth variation.

According to this variation, when the sensor 17 detects any human, the outdoor station 1 activates the image capture device 11 to start capturing an image of the human. Then, the outdoor station 1 makes the director 133 notify the human that the outdoor station 1 is ready to receive an operating command to call someone. For example, at this time, the outdoor station 1 may emit a voice message saying "enter room number if you want to put your call through or press a function button otherwise." Optionally, the outdoor station 1 may also have a text message to the same effect displayed on the monitor 18.

Then, on accepting the press of the Call button N4 for the room number entered, the outdoor station 1 calls the designated indoor station 2. Alternatively, on receiving the room number entered, the outdoor station 1 may also make determination about whether or not to accept the operating command entered as in the basic example.

On the other hand, on receiving the press of any of the function buttons 140 (or any other button such as an asterisk key N2), the outdoor station 1 makes determination about whether or not to unlock the electric lock device (i.e., determination about the first and second conditions) as described for the fifth variation.

This configuration further improves the reliability of person identification. In particular, this reduces the chances of causing a decline in handiness for visitors.

### (3.7) Seventh variation (unlocking electric lock device: Part III)

The outdoor station 1 according to the fifth variation automatically starts, on finding the first condition satisfied, making determination about the second condition. However, this is only an example and should not be construed as limiting. Alternatively, the processing of determining whether or not to accept the operating command entered may be performed between the processing of making determination about the first condition and the processing of making determination about the second condition.

When the sensor 17 detects any human, the outdoor station 1 according to this variation activates the image capture device 11 to start capturing an image of the human, and makes the director 133 give the human a direction. Then, the outdoor station 1 determines whether or not the first condition is satisfied (i.e., whether or not the human's face region falls within the predetermined range R1). When finding the first condition satisfied, the outdoor station 1 accepts the operating command entered. After the operating command has been accepted, the outdoor station 1 may emit a voice message saying "enter room number if you want to put your call through or press a function button otherwise." Optionally, the outdoor station 1 may also have a text message to the same effect displayed on the monitor 18.

Then, on accepting the press of the Call button N4 for the room number entered, the outdoor station 1 calls the designated indoor station 2. On the other hand, on receiving the press of any of the function buttons 140 (or any other button such as an asterisk key N2), the outdoor station 1 makes determination about whether or not to unlock the electric lock device (i.e., determination about the second condition) as described for the fifth variation.

This configuration further improves the reliability of person identification. In particular, this reduces the chances of causing a decline in handiness for visitors.

### (3.8) Other variations

The image capture device 11 according to the basic example is not an indispensable constituent element for the outdoor station 1. Alternatively, the image IM1 may also be captured by another image capture device (not shown) provided separately from, and in the vicinity of, the outdoor station 1. In that case, the outdoor station 1 determines, based on the image IM1 transferred from that image capture device, whether or not a particular condition is satisfied.

In the basic example described above, the predetermined direction that the guidance provider 131 prompts the operator H1 to face is the direction in which he or she faces the outdoor station 1 squarely. However, this is only an example and should not be construed as limiting. Alternatively, if the image capture device is arranged beside the outdoor station 1 as described above, then the guidance provider 131 may provide guidance information prompting the operator H1 to face that image capture device.

In the basic example described above, the first condition is that at least the face region H11 of the operator H1 should fall within the predetermined range R1 of the image IM1. Optionally, the first condition may include another condition about the proportion of the face region H11 to the predetermined range R1. For example, the first condition may be that the face region H11 should fall within the predetermined range R1 such that the face region H11 accounts for at least a certain percentage (of 50%) of the predetermined range R1 within the image IM1

In the basic example described above, the operator H1 is prompted to press the Call button N4 twice in total when the operator H1 has entered the room number and when the first condition is satisfied. However, this is only an example and should not be construed as limiting. Alternatively, one of these two presses of the Call button N4 may be omitted. For example, when finding the first condition satisfied, the outdoor station 1 may directly call the designated indoor station 2 without requiring the operator H1 to press the Call button N4 for the second time.

### (4) Resume

As can be seen from the foregoing description, an intercom door station (outdoor station 1) according to a first aspect includes: a user interface (outdoor user interface 14) to receive an operating command entered by a human (operator H1); and a controller (outdoor controller 13). The controller accepts, when finding a particular condition satisfied, the operating command received at the user interface (14). The particular condition includes at least one of a first condition or a second condition. The first condition is that at least a particular region (H10) of the human should fall within a predetermined range (R1) where the human is identifiable. The second condition is that the human should be successfully authenticated based on information about the particular region (H10). According to the first aspect, the controller accepts the operating command when finding a particular condition satisfied. This improves the reliability of person (such as a person who is operating the user interface) identification.

In an intercom door station (outdoor station 1) according to a second aspect, which may be implemented in conjunction with the first aspect, the particular region (H10) suitably includes a face region (H11) of the human (operator H1). The second aspect increases the chances of acquiring information (such as a face image) about the face region (H11), thus further improving the reliability of person identification.

An intercom door station (outdoor station 1) according to a third aspect, which may be implemented in conjunction with the first or second aspect, suitably further includes an image capture device (11) to capture an image (IM1) of the human (operator H1). The first condition is that at least the particular region (H10) should fall within the predetermined range (R1) in the image (IM1) captured by the image capture device (11). The second condition is that the human should be successfully authenticated based on information about the particular region (H10) in the image (IM1). The third aspect increases the chances of the particular region (H10) falling within the image (IM1) captured by the image capture device (11), thus further improving the reliability of person identification.

An intercom door station (outdoor station 1) according to a fourth aspect, which may be implemented in conjunction with the third aspect, suitably further includes a monitor (18) to display real-time video (IM2) captured by the image capture device (11). The monitor (18) suitably superimposes an indicator (S1) indicating the predetermined range (R1) on the real-time video (IM2). The fourth aspect allows the human to visually recognize the predetermined range (R1), thus further increasing the chances of the particular region (H10) falling within the image (IM1) captured by the image capture device (11).

In an intercom door station (outdoor station 1) according to a fifth aspect, which may be implemented in conjunction with the fourth aspect, the monitor (18) suitably hides the indicator (S1) when finding the particular condition satisfied. The fifth aspect allows the human to visually recognize, when seeing the indicator (S1) be hidden, that the particular condition is satisfied, thus improving the handiness of the intercom door station (1).

An intercom door station (outdoor station 1) according to a sixth aspect, which may be implemented in conjunction with any one of the third to fifth aspects, suitably further includes a communications device (U1) which is communicable with a telecommunications device (D1) provided separately from the intercom door station (1). The communications device (U1) suitably transmits, when the particular condition is satisfied, the image (IM1) to the telecommunications device (D1). The sixth aspect allows the image (IM1) that ensures high reliability of person identification to be transmitted to the telecommunications device (D1).

An intercom door station (outdoor station 1) according to a seventh aspect, which may be implemented in conjunction with any one of the first to sixth aspects, further includes an eye detector (8) to detect a line of sight of the human (H1). The first condition is that the particular region (H10) and the line of sight should fall within the predetermined range (R1). The seventh aspect reduces the chances of the face region (H11) of the image (IM1) captured representing a person who is looking down, even when the face region (H11) falls within the predetermined range (R1). In addition, the seventh aspect increases the chances of acquiring information about the eyes (H12) of the operator (H1) (such as an eye image), thus further improving the reliability of person identification. This allows such a piece of information to be applied to iris authentication, for example.

An intercom door station (outdoor station 1) according to an eighth aspect, which may be implemented in conjunction with any one of the first to seventh aspects, suitably further includes a guidance provider (131) to provide guidance information that prompts the human (operator H1) to face a predetermined direction. The eighth aspect increases the chances of the human facing a predetermined direction, which may be a direction in which the human faces the outdoor station (1) squarely. This increases the chances of acquiring information about the particular region (H10) (such as an image covering the particular region (H10)), thus further improving the reliability of person identification.

An intercom door station (outdoor station 1) according to a ninth aspect, which may be implemented in conjunction with any one of the first to eighth aspects, suitably further includes an alert provider (132). The alert provider (132) suitably provides, when the operating command is entered through the user interface (outdoor user interface 14) in a state where the particular condition is not satisfied, alert information about the state. The ninth aspect allows the human to learn, through the alert information provided, that the operating command is not accepted (i.e., declined), thus improving the handiness of the intercom door station (1).

In an intercom door station (outdoor station 1) according to a tenth aspect, which may be implemented in conjunction with any one of the first to ninth aspects, the user interface (outdoor user interface 14) suitably includes a monitor (18). The monitor (18) suitably displays, as an image, a touch-sensitive operating area (S2) and receives, as the operating command, a touch command on the touch-sensitive operating area (S2). The monitor (18) suitably hides the touch-sensitive operating area (S2) before the particular condition is satisfied and suitably shows the touch-sensitive operating area (S2) when the particular condition is satisfied. The tenth aspect reduces the chances of the user interface being operated in vain even though the operating command is not accepted, thus improving the handiness of the intercom door station (1).

An intercom system (10, 10A, 10B) according to an eleventh aspect includes the intercom door station (outdoor station 1) according to any one of the first to tenth aspects; and a communications device (indoor station 2) to communicate with the intercom door station. The eleventh aspect provides an intercom system (10, 10A, 10B) including an intercom door station (outdoor station 1) with the ability to improve the reliability of person (such as a person who operates the user interface) identification.

In an intercom system (10, 10A, 10B) according to a twelfth aspect, which may be implemented in conjunction with the eleventh aspect, the operating command is suitably related to calling the communications device (indoor station 2). The twelfth aspect further improves the reliability of person identification because the call is not accepted unless the particular condition is satisfied.

An intercom door station (outdoor station 1) according to a thirteenth aspect includes a director (133) and a signal output device (134). The director (133) gives a human (H1) a direction about what to do to satisfy a first condition. The signal output device (134) outputs a signal unlocking an electric lock device (V1) when finding a second condition satisfied. The first condition is that at least a particular region (H10) of the human should fall within a predetermined range (R1) where the human is identifiable. The second condition is that the human should be successfully authenticated based on information about the particular region (H10). The thirteenth aspect improves the reliability of person identification.

In an intercom door station (outdoor station 1) according to a fourteenth aspect, which may be implemented in conjunction with the thirteenth aspect, the particular region (H10) suitably includes a face region (H11) of the human (operator H1).

An intercom door station (outdoor station 1) according to a fifteenth aspect, which may be implemented in conjunction with the thirteenth or fourteenth aspect, suitably further includes an image capture device (11) to capture an image (IM1) of the human (operator H1). The first condition is that at least the particular region (H10) should fall within the predetermined range (R1) in the image (IM1) captured by the image capture device (11). The second condition is that the human should be successfully authenticated based on information about the particular region (H10) in the image (IM1).

An intercom door station (outdoor station 1) according to a sixteenth aspect, which may be implemented in conjunction with the fifteenth aspect, suitably further includes a monitor (18) to display real-time video (IM2) captured by the image capture device (11). The monitor (18) suitably superimposes an indicator (S1) indicating the predetermined range (R1) on the real-time video (IM2).

In an intercom door station (outdoor station 1) according to a seventeenth aspect, which may be implemented in conjunction with the sixteenth aspect, the monitor (18) suitably hides the indicator (S1) when finding a particular condition including at least one of the first condition or the second condition satisfied.

An intercom door station (outdoor station 1) according to an eighteenth aspect, which may be implemented in conjunction with any one of the fifteenth to seventeenth aspects, suitably further includes a communications device (U1) which is communicable with a telecommunications device (D1) provided separately from the intercom door station (1). The communications device (U1) suitably transmits, when a particular condition including at least one of the first condition or the second condition is satisfied, the image (IM1) to the telecommunications device (D1).

An intercom door station (outdoor station 1) according to a nineteenth aspect, which may be implemented in conjunction with any one of the thirteenth to eighteenth aspects, further includes an eye detector (8) to detect a line of sight of the human (H1). The first condition is that the particular region (H10) and the line of sight should fall within the predetermined range (R1).

In an intercom door station (outdoor station 1) according to a twentieth aspect, which may be implemented in conjunction with any one of the thirteenth to nineteenth aspects, the director (133) is suitably configured to provide guidance information that prompts the human (operator H1) to face a predetermined direction.

An intercom door station (outdoor station 1) according to a twenty-first aspect, which may be implemented in conjunction with any one of the thirteenth to twentieth aspects, suitably further includes: a user interface (outdoor user interface 14) to receive an operating command entered by a human (operator H1); and an alert provider (132). The alert provider (132) suitably provides, when the operating command is entered through the user interface (outdoor user interface 14) in a state where a particular condition including at least one of the first condition or the second condition is not satisfied, alert information about the state.

An intercom system (10, 10A, 10B, 10C) according to a twenty-second aspect includes: the intercom door station (outdoor station 1) according to any one of the thirteenth to twenty-first aspects; and a communications device (indoor station 2) to communicate with the intercom door station. The twenty- second aspect provides an intercom system (10, 10A, 10B, 10C) including an intercom door station (outdoor station 1) with the ability to improve the reliability of person identification.

A control method according to a twenty-third aspect is a method for controlling an intercom door station (outdoor station 1). The intercom door station includes a user interface (outdoor user interface 14) to receive an operating command entered by a human (operator H1). The control method includes accepting, when finding a particular condition satisfied, the operating command received at the user interface. The particular condition includes at least one of a first condition or a second condition. The first condition is that at least a particular region (H10) of the human should fall within a predetermined range (R1) where the human is identifiable. The second condition is that the human (H1) should be successfully authenticated based on information about the particular region (H10). The twenty-third aspect provides a control method with the ability to improve the reliability of person (such as a person who operates the user interface) identification.

A control method according to a twenty-fourth aspect is a method for controlling an intercom door station (outdoor station 1). The control method includes: giving a human a direction about what to do to satisfy a first condition; and outputting a signal unlocking an electric lock device (V1) when finding a second condition satisfied. The first condition is that at least a particular region (H10) of the human should fall within a predetermined range (R1) where the human is identifiable. The second condition is that the human should be successfully authenticated based on information about the particular region (H10). The twenty-fourth aspect provides a control method with the ability to improve the reliability of person identification.

A program according to a twenty-fifth aspect is designed to make a computer system execute the control method according to the twenty-third aspect or the twenty-fourth aspect. The twenty-fifth aspect provides the capability to improve the reliability of person identification.

Note that the constituent elements according to the second to tenth aspects and the constituent elements according to the fourteenth to twenty-first aspects are not essential elements of the intercom door station (outdoor station 1) but may be omitted as appropriate.

### Reference Signs List

- 10, 10A, 10B, 10C: Intercom System
- 1: Outdoor Station (Intercom door station)
- 11: Image Capture Device
- 13: Outdoor Controller (Controller)
- 131: Guidance Provider
- 132: Alert Provider
- 133: Director
- 134: Signal Output Device
- 14: Outdoor User interface (User interface)
- 18: Monitor
- 8: Eye Detector
- 2: Indoor Station (Communications Device)
- D1: Another Telecommunications Device
- H1: Operator (Human)
- H10: Particular Region
- H11: Face Region
- IM1: Image
- IM2: Video
- R1: Predetermined Range
- S1: Indicator
- S2: Touch-Sensitive Operating Area
- U1: Communications Device
- V1: Electric Lock Device

## Claims

1. An intercom door station (1) comprising a user interface (14) and a controller (13), wherein the controller (13) comprises a director (133) and a signal output device (134),
wherein the user interface (14) is configured to receive an operating command entered by a human (H1) for calling a communications device (2), wherein the director (133) is configured to give the human (H1) a direction about what to do to satisfy a first condition,
wherein the signal output device (134) is configured to output a signal unlocking an electric lock device (V1) when finding a second condition satisfied,
wherein, when the controller (13) finds the first condition satisfied, the controller (13) is configured to switch a call declined state for declining a call to the communications device (2) into a call accepted state for accepting a call to the communications device (2),
wherein the first condition is that at least a particular region (H10) of the human (H1) fall within a predetermined range (R1) where the human (H1) is identifiable, and
wherein the second condition is that the human (H1) be successfully authenticated based on information about the particular region (H10).

2. The intercom door station (1) of claim 1, wherein
the particular region (H10) includes a face region (H11) of the human (H1).

3. The intercom door station (1) of claim 1 or 2, further comprising an image capture device (11) configured to capture an image (IM1) of the human (H1), wherein
the first condition is that at least the particular region (H10) fall within the predetermined range (R1) in the image (IM1) captured by the image capture device (11), and
the second condition is that the human (H1) be successfully authenticated based on information about the particular region (H10) in the image (IM1).

4. The intercom door station (1) of claim 3, further comprising a monitor (18) configured to display real-time video (IM2) captured by the image capture device (11), wherein
the monitor (18) is configured to superimpose an indicator (S1), indicating the predetermined range (R1), on the real-time video (IM2).

5. The intercom door station (1) of claim 4, wherein
the monitor (18) is configured to hide the indicator (S1) when finding a particular condition including at least one of the first condition or the second condition satisfied.

6. The intercom door station (1) of any one of claims 3 to 5, further comprising a communications device (U1) configured to be communicable with a telecommunications device (D1) provided separately from the intercom door station (1), wherein
the communications device (U1) is configured to transmit, when a particular condition including at least one of the first condition or the second condition is satisfied, the image (IM1) to the telecommunications device (D1).

7. The intercom door station (1) of any one of claims 1 to 6, further comprising an eye detector (8) configured to detect a line of sight of the human (H1), wherein
the first condition is that the particular region (H10) and the line of sight fall within the predetermined range (R1).

8. The intercom door station (1) of any one of claims 1 to 7, wherein
the director (133) is configured to provide guidance information that prompts the human (H1) to face a predetermined direction.

9. The intercom door station (1) of any one of claims 1 to 8, wherein the controller (13) further includes an alert provider (132) configured to provide, when the operating command is entered through the user interface (14) in a state where a particular condition including at least one of the first condition or the second condition is not satisfied, alert information about the state.

10. An intercom system (10, 10A, 10B, 10C) comprising:
the intercom door station (1) of any one of claims 1 to 9; and
the communications device (2) configured to communicate with the intercom door station (1).

11. A method for controlling an intercom door station (1), the method comprising:
receiving an operating command entered by a human (H1) for calling a communications device (2);
giving the human (H1) a direction about what to do to satisfy a first condition;
outputting a signal unlocking an electric lock device (V1) when finding a second condition satisfied; and
when finding the first condition satisfied, switching a call declined state for declining a call to the communications device (2) into a call accepted state for accepting a call to the communications device (2),
wherein the first condition is that at least a particular region (H10) of the human (H1) fall within a predetermined range (R1) where the human (H1) is identifiable, and
wherein the second condition is that the human (H1) be successfully authenticated based on information about the particular region (H10).

12. A program designed to make a computer system execute the method of claim 11.

## Patentansprüche

1. Gegensprechanlagen-Türstation, die (1) eine Benutzerschnittstelle (14) und eine Steuereinheit (13) aufweist, wobei die Steuereinheit (13) einen Leiter (133) und eine Signalausgabevorrichtung (134) aufweist,
wobei die Benutzerschnittstelle (14) konfiguriert ist, um einen Bedienbefehl zu empfangen, der von einem Menschen (H1) zum Anrufen einer Kommunikationsvorrichtung (2) eingegeben wird, wobei der Leiter (133) konfiguriert ist, um dem Menschen (H1) eine Richtung hinsichtlich einer erforderlichen Handlung zu zeigen, um eine erste Bedingung zu erfüllen,
wobei die Signalausgabevorrichtung (134) konfiguriert ist, um ein Signal auszugeben, das eine elektrische Verriegelungsvorrichtung (V1) entriegelt, wenn festgestellt wird, dass eine zweite Bedingung erfüllt ist,
wobei, wenn die Steuereinheit (13) feststellt, dass die erste Bedingung erfüllt ist, die Steuereinheit (13) konfiguriert ist, um einen Anrufablehnungszustand zum Ablehnen eines Anrufs an die Kommunikationsvorrichtung (2) in einen Anrufannahmezustand zum Annehmen eines Anrufs an die Kommunikationsvorrichtung (2) umzuschalten,
wobei die erste Bedingung ist, dass mindestens eine spezielle Region (H10) des Menschen (H1) in einen vorbestimmten Bereich (R1) fällt, in dem der Mensch (H1) identifizierbar ist, und
wobei die zweite Bedingung ist, dass der Mensch (H1) auf der Grundlage von Informationen über die spezielle Region (H10) erfolgreich authentifiziert ist.

2. Gegensprechanlagen-Türstation (1) nach Anspruch 1, wobei
die spezielle Region (H10) eine Gesichtsregion (H11) des Menschen (H1) umfasst.

3. Gegensprechanlagen-Türstation (1) nach Anspruch 1 oder 2, ferner eine Bilderfassungsvorrichtung (11) aufweisend, die konfiguriert ist, um ein Bild (IM1) des Menschen (H1) zu erfassen, wobei
die erste Bedingung ist, dass mindestens die spezielle Region (H10) in dem Bild (IM1), das von der Bilderfassungsvorrichtung (11) erfasst wird, in den vorbestimmten Bereich (R1) fällt, und
die zweite Bedingung ist, dass der Mensch (H1) auf der Grundlage von Informationen über die spezielle Region (H10) in dem Bild (IM1) erfolgreich authentifiziert ist.

4. Gegensprechanlagen-Türstation (1) nach Anspruch 3, ferner einen Monitor (18) aufweisend, der konfiguriert ist, um ein Echtzeitvideo (IM2), das von der Bilderfassungsvorrichtung (11) erfasst wird, anzuzeigen, wobei
der Monitor (18) konfiguriert ist, um dem Echtzeitvideo (IM2) einen Indikator (S1) zu überlagern, der den vorbestimmten Bereich (R1) angibt.

5. Gegensprechanlagen-Türstation (1) nach Anspruch 4, wobei
der Monitor (18) konfiguriert ist, um den Indikator (S1) auszublenden, wenn eine spezielle Bedingung, die mindestens eine der ersten Bedingung oder der zweiten Bedingung umfasst, erfüllt ist.

6. Gegensprechanlagen-Türstation (1) nach einem der Ansprüche 3 bis 5, ferner eine Kommunikationsvorrichtung (U1) aufweisend, die konfiguriert ist, um mit einer Telekommunikationsvorrichtung (D1), die getrennt von der Gegensprechanlagen-Türstation (1) vorgesehen ist, kommunizieren zu können, wobei
die Kommunikationsvorrichtung (U1) konfiguriert, um, wenn eine spezielle Bedingung, die mindestens eine der ersten Bedingung oder der zweiten Bedingung umfasst, erfüllt ist, das Bild (IM1) an die Telekommunikationsvorrichtung (D1) zu übertragen.

7. Gegensprechanlagen-Türstation (1) nach einem der Ansprüche 1 bis 6, ferner einen Augendetektor (8) aufweisend, der konfiguriert ist, um eine Blickrichtung des Menschen (H1) zu erkennen, wobei
die erste Bedingung ist, dass die spezielle Region (H10) und die Sichtlinie in den vorbestimmten Bereich (R1) fallen.

8. Gegensprechanlagen-Türstation (1) nach einem der Ansprüche 1 bis 7, wobei
der Leiter (133) konfiguriert ist, um Führungsinformationen vorzusehen, die den Menschen (H1) auffordern, in eine vorbestimmte Richtung zu schauen.

9. Gegensprechanlagen-Türstation (1) nach einem der Ansprüche 1 bis 8, wobei die Steuereinheit (13) ferner einen Alarmgeber (132) enthält, der konfiguriert ist, um, wenn der Bedienbefehl über die Benutzerschnittstelle (14) in einem Zustand eingegeben wird, in dem eine spezielle Bedingung, die mindestens eine der ersten Bedingung oder der zweiten Bedingung umfasst, nicht erfüllt ist, Alarminformationen über den Zustand vorzusehen.

10. Gegensprechsystem (10, 10A, 10B, 10C), aufweisend:
die Gegensprechanlagen-Türstation (1) nach einem der Ansprüche 1 bis 9; und
die Kommunikationsvorrichtung (2), die konfiguriert ist, um mit der Gegensprechanlagen-Türstation (1) zu kommunizieren.

11. Verfahren zur Steuerung einer Gegensprechanlagen-Türstation (1), wobei das Verfahren umfasst:
Empfangen eines Bedienbefehls, der von einem Menschen (H1) zum Anrufen einer Kommunikationsvorrichtung (2) eingegeben wird;
Zeigen einer Richtung für den Menschen (H1) hinsichtlich einer erforderlichen Handlung, um eine erste Bedingung zu erfüllen;
Ausgeben eines Signals, das eine elektrische Verriegelungsvorrichtung (V1) entriegelt, wenn eine zweite Bedingung erfüllt ist; und
wenn festgestellt wird, dass die erste Bedingung erfüllt ist, Umschalten eines Anrufablehnungszustands zum Ablehnen eines Anrufs an die Kommunikationsvorrichtung (2) in einen Anrufannahmezustand zum Annehmen eines Anrufs an die Kommunikationsvorrichtung (2),
wobei die erste Bedingung ist, dass mindestens eine bestimmte Region (H10) des Menschen (H1) in einen vorbestimmten Bereich (R1) fällt, in dem der Mensch (H1) identifizierbar ist, und
wobei die zweite Bedingung ist, dass der Mensch (H1) auf der Grundlage von Informationen über die spezielle Region (H10) erfolgreich authentifiziert ist.

12. Programm, entworfen, um ein Computersystem zu veranlassen, das Verfahren nach Anspruch 11 auszuführen.

## Revendications

1. Platine de rue d'interphone (1) comprenant une interface utilisateur (14) et un contrôleur (13), dans lequel le contrôleur (13) comprend un élément directeur (133) et un dispositif de sortie de signal (134) ;
dans laquelle l'interface utilisateur (14) est configurée de manière à recevoir une instruction de fonctionnement saisie par un être humain (H1), pour appeler un dispositif de communication (2), dans lequel l'élément directeur (133) est configuré de manière à donner à l'être humain (H1) une consigne sur ce qu'il doit faire pour satisfaire une première condition ;
dans laquelle le dispositif de sortie de signal (134) est configuré de manière à fournir en sortie un signal déverrouillant un dispositif de verrouillage électrique (V1), lorsqu'il est déterminé qu'une seconde condition est satisfaite ;
dans laquelle, lorsque le contrôleur (13) détermine que la seconde condition est satisfaite, le contrôleur (13) est configuré de manière à commuter un état d'appel refusé, pour refuser un appel à destination du dispositif de communication (2), en un état d'appel accepté, pour accepter un appel à destination du dispositif de communication (2) ;
dans laquelle la première condition est qu'au moins une région spécifique (H10) de l'être humain (H1) se situe dans une plage prédéterminée (R1) où l'être humain (H1) est identifiable ; et
dans laquelle la seconde condition est que l'être humain (H1) soit correctement authentifié sur la base d'informations concernant la région spécifique (H10).

2. Platine de rue d'interphone (1) selon la revendication 1, dans laquelle :
la région spécifique (H10) inclut une région de visage (H11) de l'être humain (H1).

3. Platine de rue d'interphone (1) selon la revendication 1 ou 2, comprenant en outre un dispositif de capture d'image (11) configuré de manière à capturer une image (IM1) de l'être humain (H1), dans laquelle :
la première condition est qu'au moins la région spécifique (H10) se situe dans la plage prédéterminée (R1) dans l'image (IM1) capturée par le dispositif de capture d'image (11) ; et
la seconde condition est que l'être humain (H1) soit correctement authentifié sur la base d'informations concernant la région spécifique (H10) dans l'image (IM1).

4. Platine de rue d'interphone (1) selon la revendication 3, comprenant en outre un moniteur (18) configuré de manière à afficher une vidéo en temps réel (IM2) capturée par le dispositif de capture d'image (11), dans laquelle :
le moniteur (18) est configuré de manière à superposer un indicateur (S1), indiquant la plage prédéterminée (R1), sur la vidéo en temps réel (IM2).

5. Platine de rue d'interphone (1) selon la revendication 4, dans laquelle :
le moniteur (18) est configuré de manière à masquer l'indicateur (S1) lorsqu'il détermine qu'une condition spécifique, incluant au moins l'une parmi la première condition et la seconde condition, est satisfaite.

6. Platine de rue d'interphone (1) selon l'une quelconque des revendications 3 à 5, comprenant en outre un dispositif de communication (U1) configuré de manière à pouvoir communiquer avec un dispositif de télécommunication (D1) fourni séparément de la platine de rue d'interphone (1), dans laquelle :
le dispositif de communication (U1) est configuré de manière à transmettre, lorsqu'une condition spécifique, incluant au moins l'une parmi la première condition et la seconde condition, est satisfaite, l'image (IM1), au dispositif de télécommunication (D1).

7. Platine de rue d'interphone (1) selon l'une quelconque des revendications 1 à 6, comprenant en outre un détecteur oculaire (8) configuré de manière à détecter une ligne de visée de l'être humain (H1), dans laquelle :
la première condition est que la région spécifique (H 10) et la ligne de visée se situent dans la plage prédéterminée (R1).

8. Platine de rue d'interphone (1) selon l'une quelconque des revendications 1 à 7, dans laquelle :
l'élément directeur (133) est configuré de manière à fournir des informations de guidage qui invitent l'être humain (H1) à faire face à une direction prédéterminée.

9. Platine de rue d'interphone (1) selon l'une quelconque des revendications 1 à 8, dans laquelle le contrôleur (13) inclut en outre un fournisseur de message d'alerte (132) configuré de manière à fournir, lorsque l'instruction de fonctionnement est saisie par le biais de l'interface utilisateur (14), dans un état où une condition spécifique, incluant au moins l'une parmi la première condition et la seconde condition, n'est pas satisfaite, des informations d'alerte concernant l'état.

10. Système d'interphone (10, 10A, 10B, 10C) comprenant :
la platine de rue d'interphone (1) selon l'une quelconque des revendications 1 à 9 ; et
le dispositif de communication (2) configuré de manière à communiquer avec la platine de rue d'interphone (1).

11. Procédé de commande d'une platine de rue d'interphone (1), le procédé comprenant les étapes ci-dessous consistant à :
recevoir une instruction de fonctionnement saisie par un être humain (H1), pour appeler un dispositif de communication (2) ;
donner à l'être humain (H1) une consigne sur ce qu'il doit faire pour satisfaire une première condition ;
fournir en sortie un signal déverrouillant un dispositif de verrouillage électrique (V1) lorsqu'il est déterminé qu'une seconde condition est satisfaite ; et
lorsqu'il est déterminé que la première condition est satisfaite, commuter un état d'appel refusé, pour refuser un appel à destination du dispositif de communication (2), en un état d'appel accepté, pour accepter un appel à destination du dispositif de communication (2) ;
dans lequel la première condition est qu'au moins une région spécifique (H10) de l'être humain (H1) se situe dans une plage prédéterminée (R1) où l'être humain (H1) est identifiable ; et
dans lequel la seconde condition est que l'être humain (H1) soit correctement authentifié sur la base d'informations concernant la région spécifique (H10).

12. Programme conçu pour amener un système informatique à exécute le procédé selon la revendication 11.
